(19) Europäisches Patentamt
European Patent Office
Office européen des brevets

(11) **EP 4 632 456 A2**

(12) **EUROPEAN PATENT APPLICATION**

(43) Date of publication:
**15.10.2025 Bulletin 2025/42**

(21) Application number: **25198640.2**

(22) Date of filing: **28.08.2025**

(51) International Patent Classification (IPC):
*G02B 9/62* (2006.01)   *G02B 13/18* (2006.01)

(52) Cooperative Patent Classification (CPC):
**G02B 13/0045; G02B 9/62; G02B 13/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.02.2025 CN 202510131255**

(71) Applicant: **Jiangxi OFILM Optical Co., Ltd.
Nanchang, Jiangxi 330096 (CN)**

(72) Inventors:
• **LIU, Quanwei
Nanchang, 330096 (CN)**
• **LAN, Binli
Shenzhen, 518106 (CN)**
• **QIU, Yuanhuang
Nanchang, 330096 (CN)**

(74) Representative: **Metida
Gyneju str. 16
01109 Vilnius (LT)**

(54) **OPTICAL LENS, IMAGE MODULE, AND TERMINAL DEVICE**

(57) An optical lens (100) includes: a first lens (L1), a second lens (L2) and a fifth lens (L5) each having negative refractive power, and a third lens (L3) and a fourth lens (L4) each having positive refractive power, and a sixth lens (L6) having refractive power. Near the optical axis (0), an object side surface (S1) of the first lens (L1), an imaging side surface (S4) of the second lens (L2), an object side surface (S5) of the third lens (L3), an object side surface (S7) and an imaging side surface (SS) of the fourth lens (L4), and an object side surface (S11) of the sixth lens (L6) are both convex, an imaging side surface (S2) of the first lens (L1), an object side surface (S3) of the second lens (L2), an object side surface (S9) of the fifth lens (L5), and an imaging side surface (S12) of the sixth lens (L6) are both concave. The optical lens (100) satisfies: 115°<FOV<130°, and 4.8<TTL/F<5.5.

FIG. 1

EP 4 632 456 A2

**Description**

FIELD

The present invention relates to field of imaging, and in particular to an optical lens, an image module, and a terminal device.

BACKGROUND

With the rapid development of automotive assisted driving systems in recent years, optical lenses have been widely applied in automobiles. For example, optical lenses can be widely used in vehicle rearview camera systems, dash cameras, automatic parking and panoramic parking systems, road navigation systems, etc. Vehicle-mounted optical lenses are key components for automotive assisted driving systems to obtain external information. With the rapid development of automotive assisted driving systems, the performance requirements for optical lenses used in forward-looking applications are also getting higher and higher, and are developing towards large field of view, high resolution and miniaturization. Therefore, there is currently a need for an optical lens with a large field of view, high resolution and miniaturization to meet the forward-looking application requirements of automobiles.

SUMMARY

According to various embodiments of the present application, an optical lens, an image module, and a terminal device are provided to meet the requirements of a large field of view, high resolution, and miniaturization.

In order to achieve the above objects, in a first aspect, the present application discloses an optical lens. The optical lens sequentially includes a first lens, a second lens, a third lens, a fourth lens, a fifth lens, a sixth lens, and an image plane along an optical axis from an object side to an imaging side. The first lens has negative refractive power, an object side surface of the first lens is convex near the optical axis, and an imaging side surface of the first lens is concave near the optical axis. The second lens has negative refractive power, an object side surface of the second lens is concave near the optical axis, and an imaging side surface of the second lens is convex near the optical axis. The third lens has positive refractive power, an object side surface of the third lens is convex near the optical axis. The fourth lens has positive refractive power, an object side surface of the fourth lens is convex near the optical axis, an imaging side surface of the fourth lens is convex near the optical axis. The fifth lens has negative refractive power, an object side surface of the fifth lens is concave near the optical axis. The sixth lens has refractive power, an object side surface of the sixth lens is convex near the optical axis, an imaging side surface of the sixth lens is concave near the optical axis. The optical lens satisfies following conditional expressions: 115°<FOV<130°, and 4.8<TTL/F<5.5. Wherein, FOV is the maximum field of view of the optical lens, TTL is a distance from the object side surface of the first lens to the image plane of the optical lens along the optical axis, F is an effective focal length of the optical lens.

In the above optical lens, the first lens has negative refractive power, the object side surface is convex near the optical axis and the imaging side surface is concave near the optical axis, which can effectively control the effective aperture of the first lens of the optical lens, allowing the optical lens to have a large incident angle of light, which is conducive to achieving a large field of view of the optical lens. The second lens has negative refractive power, the object side surface is concave near the optical axis and the imaging side surface is convex near the optical axis, which can effectively constrain the large-angle incident light projected by the first lens, allowing the light to be projected gently after passing through the second lens, which is conducive to reducing the field curvature and astigmatism of the optical lens and minimizing distortion. The third lens has positive refractive power, and the object side surface of the third lens is convex near the optical axis, the light projected gently by the second lens can be converged after passing through the third lens, thereby reducing the eccentricity sensitivity of the optical lens and shortening the total optical length of the optical lens. The fourth lens with positive refractive power can be well bonded with the fifth lens with negative refractive power to form a cemented lens, which is conducive to reducing the chromatic aberration of the optical lens and correcting the spherical aberration of the optical lens, improving the resolution of the optical lens, and at the same time reducing the size of the optical lens. In addition, the fourth lens has positive refractive power, the object side surface is convex near the optical axis and the imaging side surface is convex near the optical axis, which is conducive to improving the resolution of the optical lens. The fifth lens has negative refractive power and the object side surface is concave near the optical axis, the light projected by the fourth lens is allowed to enter gently, which is conducive to reducing the chromatic aberration of the optical lens, correcting the spherical aberration of the optical lens, and improving the resolution of the optical lens. The sixth lens has refractive power, the object side surface is convex near the optical axis and the imaging side surface is concave near the optical axis, the light projected gently by the fifth lens can be converged after passing through the object side surface of the sixth lens and enter the imaging surface gently after passing through the imaging side surface of the sixth lens, thereby improving the resolution of the optical lens and at the same time facilitating the optical lens to be adapted to a large-sized image plane.

When the optical lens satisfies 115°≤FOV≤130°, the optical lens has a relatively large field of view, which is beneficial for the optical lens to obtain information of objects within a larger angle, and meets the requirement of a large field of view. When the optical lens satisfies 4.8<TTL/F<5.5, a ratio of the total length of the optical lens to the effective focal length of the optical lens can be controlled within a reasonable range, which helps converge the light on the image plane better, helps improve the resolution of the optical lens and reduce its sensitivity, and at the same time, which is conducive to achieving a miniaturized design of the optical lens.

In a second aspect, the present application discloses an image module. The image module includes a photosensitive chip and the above-mentioned optical lens, the photosensitive chip is arranged on the imaging side of the optical lens. The image module with the above-mentioned optical lens can a meet the requirements of large field of view, high resolution and miniaturization.

In a third aspect, the present application discloses a terminal device. The terminal device includes a housing and the above-mentioned image module, the image module is arranged in the housing. The terminal device with the above-mentioned image module can meet the requirements of large field of view, high resolution and miniaturization.

BRIEF DESCRIPTION OF THE DRAWINGS

FIG. 1 is a schematic structure diagram of an optical lens of a first embodiment of the present application.
FIG. 2 is a longitudinal spherical aberration diagram, astigmatism curve diagram and distortion diagram of the optical lens of the first embodiment of the present application.
FIG. 3 is a schematic structure diagram of an optical lens of a second embodiment of the present application.
FIG. 4 is a longitudinal spherical aberration diagram, astigmatism curve diagram and distortion diagram of the optical lens of the second embodiment of the present application.
FIG. 5 is a schematic structure diagram of an optical lens of a third embodiment of the present application.
FIG. 6 is a longitudinal spherical aberration diagram, astigmatism curve diagram and distortion diagram of the optical lens of the third embodiment of the present application.
FIG. 7 is a schematic structure diagram of an optical lens of a fourth embodiment of the present application.
FIG. 8 is a longitudinal spherical aberration diagram, astigmatism curve diagram and distortion diagram of the optical lens of the fourth embodiment of the present application.
FIG. 9 is a schematic structure diagram of an optical lens of a fifth embodiment of the present application.
FIG. 10 is a longitudinal spherical aberration diagram, astigmatism curve diagram and distortion diagram of the optical lens of the fifth embodiment of the present application.
FIG. 11 is a schematic structure diagram of an optical lens of a sixth embodiment of the present application.
FIG. 12 is a longitudinal spherical aberration diagram, astigmatism curve diagram and distortion diagram of the optical lens of the sixth embodiment of the present application.
FIG. 13 is a schematic diagram of an image module of an embodiment of the present application.
FIG. 14 is a schematic diagram of a terminal device of an embodiment of the present application.

DETAILED DESCRIPTION

The following will describe the technical solutions of the embodiments of the present disclosure clearly and completely in combination with the accompanying drawings of the embodiments of the present disclosure. Obviously, the described embodiments are only part of the embodiments of the present disclosure, not all of them. Based on the embodiments of the present disclosure, those skilled in the art can make various modifications or variations without departing from the spirit or scope of the present disclosure. All other embodiments obtained by persons of ordinary skill in the art without making creative efforts fall within the scope of protection of the present disclosure.

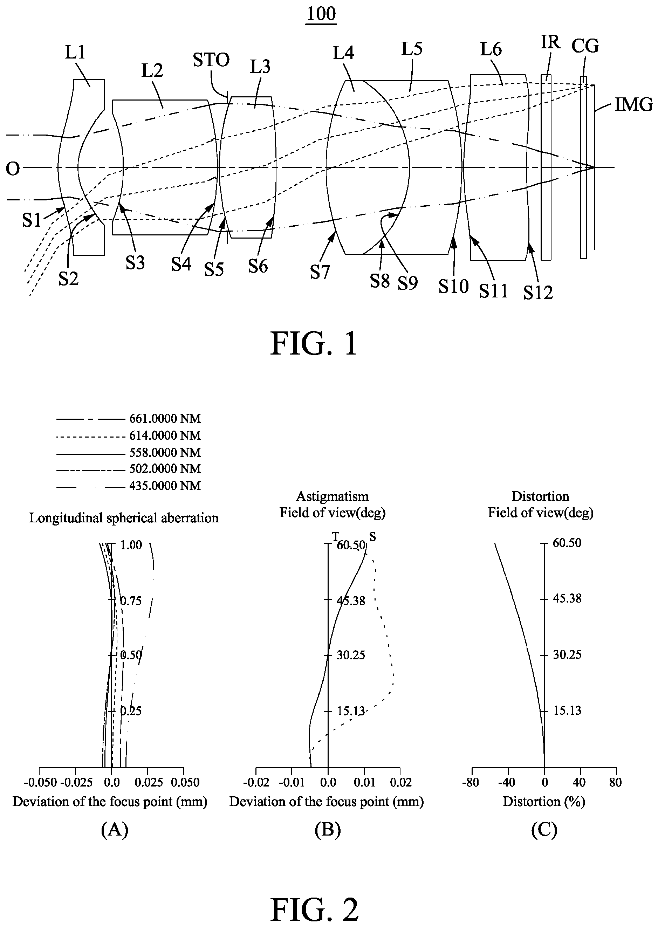

Referring to FIG. 1, in some embodiments of the present application, an optical lens 100 sequentially includes a first lens L1, a second lens L2, a third lens L3, a fourth lens L4, a fifth lens L5, and a sixth lens L6 along an optical axis O from an object side to an imaging side. During imaging, light enters the first lens L1, the second lens L2, the third lens L3, the fourth lens L4, the fifth lens L5, and the sixth lens L6 in that sequence from the object side of the first lens L1 and finally forms an image on an image plane IMG of the optical lens 100.

Further, The first lens L1 has negative refractive power, the second lens L2 has negative refractive power, third lens L3 has positive refractive power, the fourth lens L4 has positive refractive power, the fifth lens L5 has negative refractive power, and the sixth lens L6 has refractive power.

Further, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an object side surface S7 of the fourth lens L4 is convex near the optical axis O, an imaging side surface S8 of the fourth lens L4 is convex near the optical axis O, an object side surface S9 of the fifth lens L5 is concave near the optical axis O, an object side surface S11 of the sixth lens L6 is convex near the optical axis O, and an imaging side surface S12 of the sixth lens L6 is concave near the optical axis O.

In the above optical lens 100, the first lens L1 has negative refractive power, the object side surface S1 is convex near the optical axis O and the imaging side surface S2 is concave near the optical axis O, which can effectively control the effective aperture of the first lens L1 of the optical lens 100, allowing the optical lens 100 to have a large incident angle of light, which is conducive to achieving a large field of view of the optical lens 100. The second lens L2 has negative refractive power, the object side surface S3 is concave near the optical axis O and the imaging side surface S4 is convex near the optical axis O, which can effectively constrain the large-angle incident light projected by the first lens L1, allowing the light to be projected gently after passing through the second lens L2, which is conducive to reducing the field curvature and astigmatism of the optical lens 100 and minimizing distortion. The third lens L3 has positive refractive power, and the object side surface S5 of the third lens L3 is convex near the optical axis O, the light projected gently by the second lens L2 can be converged after passing through the third lens L3, thereby reducing the eccentricity sensitivity of the optical lens 100 and shortening the total optical length of the optical lens 100. The fourth lens L4 with positive refractive power can be well bonded with the fifth lens L5 with negative refractive power to form a cemented lens, which is conducive to reducing the chromatic aberration of the optical lens 100 and correcting the spherical aberration of the optical lens 100, improving the resolution of the optical lens 100, and at the same time reducing the size of the optical lens 100. In addition, the fourth lens L4 has positive refractive power, the object side surface S7 is convex near the optical axis O and the imaging side surface S8 is convex near the optical axis O, which is conducive to improving the resolution of the optical lens 100. The fifth lens L5 has negative refractive power and the object side surface S9 is concave near the optical axis O, the light projected by the fourth lens L4 is allowed to enter gently, which is conducive to reducing the chromatic aberration of the optical lens 100, correcting the spherical aberration of the optical lens 100, and improving the resolution of the optical lens 100. The sixth lens L6 has refractive power, the object side surface S11 is convex near the optical axis O and the imaging side surface S12 is concave near the optical axis O, the light projected gently by the fifth lens L5 can be converged after passing through the object side surface S11 of the sixth lens L6 and enter the imaging surface IMG gently after passing through the imaging side surface S12 of the sixth lens L6, thereby improving the resolution of the optical lens 100 and at the same time facilitating the optical lens 100 to be adapted to a large-sized image plane. Therefore, the optical lens 100 of this application can meet the requirements of a large field of view, high resolution, and miniaturization.

In some embodiments, when the optical lens 100 is applied to terminal devices such as vehicle-mounted devices and dash cameras, the first lens L1, the second lens L2, the third lens L3, the fourth lens L4, the fifth lens L5, and the sixth lens L6 may be made of glass, which can not only provide good optical effects but also reduce the influence of temperature on the above lenses. Of course, among the above multiple lenses of the optical lens 100, some lenses may be made of glass and some may be made of plastic, which can not only ensure the reduction of the influence of temperature on the lenses to achieve better imaging effects, but also reduce the processing cost and the weight of the lenses to reduce the processing cost of the optical lens 100 and the overall weight of the optical lens 100. Additionally, it can be understood that when the optical lens 100 is applied to terminal devices such as smart phones and smart tablets, the materials of the first lens L1, the second lens L2, the third lens L3, the fourth lens L4, the fifth lens L5, and the sixth lens L6 may be plastic to reduce the overall weight of the optical lens 100.

In some embodiments, spherical lenses have the advantages of simple manufacturing process and low production cost, and can facilitate flexible design of the surface shape of the lens and the improvement of the imaging resolution of the optical lens 100. Aspheric lenses can provide more flexible design for the object side surface or the imaging side surface of the lens, allowing the lens to solve problems such as unclear imaging, distorted view, or narrow field of view even when it is small and thin, moreover, the optical lens 100 can have good imaging quality without setting too many lenses, which is beneficial for shortening the length of the optical lens 100. Based on this, the second lens L2, the third lens L3, the fourth lens L4, and the fifth lens L5 may be spherical lenses, and the first lens L1 and the sixth lens L6 may be an aspheric lens. In this way, through the combination of spherical and aspheric designs, not only the processability of each lens can be improved, which is beneficial for surface shape design, but also the object side surface or imaging side surface of the lens can have more flexible designs, allowing each lens to solve problems such as unclear imaging, distorted view, or narrow field of view even when it is small and thin. Moreover, the optical lens 100 can have good imaging quality without setting too many lenses, which is beneficial for shortening the length of the optical lens 100. It can be understood that in some embodiments, the surfaces of each lens in the optical lens 100 may be all spherical surfaces, all aspheric surfaces, or any combination of spherical surface and aspheric surface, and the specific choice can be made according to actual needs, so no specific limitations are made in this embodiment.

In some embodiments, the optical lens 100 may further include an aperture STO, and the aperture STO which may be an aperture diaphragm and/or a field diaphragm. For example, the aperture STO may be an aperture diaphragm, or the aperture STO may be a field diaphragm, or the aperture STO may be formed by an aperture diaphragm and a field diaphragm. By arranging the aperture STO between the imaging side surface S4 of the second lens L2 and the object side surface S5 of the third lens L3, the exit pupil can be moved away from the image plane IMG, thereby reducing the effective diameter of the optical lens 100 without reducing the telecentricity of the optical lens 100, so that the miniaturization is achieved. It can be understood that in some embodiments, the aperture STO may also be set between other lenses, and the location of the aperture STO can be adjusted according to the actual situation, and no specific limitations are made in this embodiment.

In some embodiments, the optical lens 100 may further include a filter IR, which is arranged between the sixth lens L6 and the image plane IMG of the optical lens 100. In some embodiments, the filter IR may be an infrared cut-off filter to filter out infrared light and allow visible light to pass through, thereby allowing the imaging more in line with human visual experience and improving the imaging quality. In some embodiments, the filter IR may be an infrared bandpass filter to allow infrared light to pass through and reflect visible light, thereby achieving infrared imaging of the optical lens 100, allowing the optical lens 100 to image and obtain good imaging quality in low-light environments or special application scenarios. It can be understood that the filter IR may be made of plastic, optical glass with a coating, or other materials, and the specific choice can be made according to actual needs, and no specific limitations are made in this embodiment.

In some embodiments, the optical lens 100 may further include a protective glass CG, which is arranged between the filter IR and the image plane IMG of the optical lens 100, thereby protecting a photosensitive chip and preventing dust. The protective glass CG may be made of plastic, optical glass with a coating, or other materials, and the specific choice can be made according to actual needs, and no specific limitations are made in this embodiment. It can be understood that the protective glass CG can be a part of the optical lens 100 or removed from the optical lens 100. However, when the protective glass CG is removed, the total optical length of the optical lens 100 remains unchanged.

In some embodiments, the optical lens 100 may satisfy the following conditional expression: 115°≤FOV≤130°. Wherein, FOV is the maximum field of view angle of the optical lens 100. In some embodiments, 115°≤FOV≤127°. When the optical lens 100 satisfies the above conditional expression, the optical lens 100 has a relatively large field of view, which is beneficial for the optical lens 100 to obtain information of objects within a larger angle, and meets the requirement of a large field of view.

In some embodiments, the optical lens 100 may satisfy the following conditional expression: 4.8<TTL/F<5.5. Wherein, TTL is a distance from the object side surface S1 of the first lens L1 to the image plane IMG of the optical lens 100 along the optical axis O (that is, a total length of the optical lens 100), and F is an effective focal length of the optical lens 100. In some embodiments, 4.886<TTL/F<5.415. When the optical lens 100 satisfies the above conditional expression, a ratio of the total length of the optical lens 100 to the effective focal length of the optical lens 100 can be controlled within a reasonable range, which helps converge the light on the image plane IMG better, helps improve the resolution of the optical lens 100 and reduce its sensitivity, and at the same time, which is conducive to achieving a miniaturized design of the optical lens 100.

In some embodiments, the optical lens 100 may satisfy the following conditional expression: 6.5≤TTL/SD1≤7.2. Wherein, SD1 is half of the maximum effective aperture of the object side surface S1 of the first lens L1. In some embodiments, 6.503≤TTL/SD1≤7.105. When the optical lens 100 satisfies the above conditional expression, under a certain total length of the optical lens 100, by reasonably configuring a ratio of the total length TTL to the half of the maximum effective aperture SD1 of the object side surface S1 of the first lens L1, it effectively limits the head size and volume of the optical lens 100, which is beneficial for achieving the miniaturized design of the optical lens 100.

In some embodiments, the optical lens 100 may satisfy the following conditional expression: 1.24≤F/ImgH≤1.4. Wherein, ImgH is half of an image height corresponding to the maximum field of view angle of the optical lens 100. In some embodiments, 1.248≤F/ImgH≤1.382. When the optical lens 100 satisfies the above conditional expression, by reasonably configuring a ratio of F to ImgH, it is beneficial for improving the resolution of the optical lens 100, thereby enhancing the imaging quality of the optical lens 100.

In some embodiments, the optical lens 100 may satisfy the following conditional expression: -2.1≤F1/F≤-1.7. Wherein, F1 is an effective focal length of the first lens L1. In some embodiments, -2.031≤F1/F≤-1.722. When the optical lens 100 satisfies the above conditional expression, by reasonably configuring a ratio of the effective focal length F1 of the first lens L1 to the effective focal length F of the optical lens 100, it can avoid introducing excessive spherical aberration through the first lens L1 and effectively correct aberrations, thereby improving the resolution capability of the optical lens 100.

In some embodiments, the optical lens 100 may satisfy the following conditional expression: 1.9≤F3/F≤2.2. Wherein, F3 is an effective focal length of the third lens L3. In some embodiments, 1.915≤F3/F≤2.148. When the optical lens 100 satisfies the above conditional expression, by reasonably configuring a ratio of the effective focal length F3 of the third lens L3 to the effective focal length F of the optical lens 100, it can effectively collect and compress the incident light of the first lens L1 and the second lens L2, thereby allowing the light to gently transition from the third lens L3 to the fourth lens L4, and reducing spherical aberration and aberration generation, so that the imaging quality of the optical lens 100 is improved.

In some embodiments, the optical lens 100 may satisfy the following conditional expression: 1≤F4/F≤1.4.

Wherein, F4 is an effective focal length of the fourth lens L4. In some embodiments, $1.086 \leq F4/F \leq 1.365$. When the optical lens 100 satisfies the above conditional expression, by reasonably configuring a ratio of the effective focal length F4 of the fourth lens L4 to the effective focal length F of the optical lens 100, it is convenient for the fourth lens L4 and the fifth lens L5 to combine and effectively correct aberrations, thereby further improving the resolution capability of the optical lens 100.

In some embodiments, the optical lens 100 may satisfy the following conditional expression: $-11 \leq F1/CT1 \leq -8$. Wherein, CT1 is a thickness of the first lens L1 at the optical axis O. In some embodiments, $-10.345 \leq F1/CT1 \leq -8.734$. When the optical lens 100 satisfies the above conditional expression, by reasonably configuring a ratio of the effective focal length F1 of the first lens L1 to the thickness CT1 of the first lens L1, it can ensure that the incident light entering the optical lens 100 at a large angle can smoothly enter, thereby expanding the field of view angle range of the optical lens 100 and meeting the demand for a wide field of view.

In some embodiments, the optical lens 100 may satisfy the following conditional expression: $1.3 \leq SAGS2/CT1 \leq 1.6$. Wherein, SAGS2 is a vector height of an edge of an optical effective diameter of the imaging side surface S2 of the first lens L1. In some embodiments, $1.313 \leq SAGS2/CT1 \leq 1.574$. When the optical lens 100 satisfies the above conditional expression, by reasonably configuring a ratio of SAGS2 to CT1, it is beneficial to control the degree of curvature of the imaging side surface S2 of the first lens L1, thereby controlling the head diameter of the first lens L1 and facilitating the processing of the first lens L1. When exceeding the upper limit of the above conditional expression, the imaging side surface S2 of the first lens L1 is overly curved, which is not conducive to the surface shape control of the first lens L1 and increases the risk of ghosting. When below the lower limit of the above conditional expression, the first lens L1 is too thick, thereby affecting the miniaturization of the overall optical lens 100.

In some embodiments, the optical lens 100 may satisfy the following conditional expression: $0.95 \leq SD1/ImgH \leq 1.05$. In some embodiments, $0.95 \leq SD1/ImgH \leq 1.038$. When the optical lens 100 satisfies the above conditional expression, by reasonably configuring a ratio of SD1 to ImgH, the optical lens 100 can meet the requirements of adapting to a large-sized image plane IMG, while also considering the miniaturization design of the head of the optical lens 100.

In some embodiments, the optical lens 100 may satisfy the following conditional expression: $0.8 \leq SD7/SD6 \leq 1.2$. Wherein, SD6 is half of the maximum effective aperture of the imaging side surface S6 of the third lens L3, and SD7 is half of the maximum effective aperture of the object side surface S7 of the fourth lens L4. In some embodiments, $0.868 \leq SD7/SD6 \leq 1.157$. When the optical lens 100 satisfies the above conditional expression, by reasonably configuring a ratio of SD7 to SD6, it can reduce the total optical length of the optical lens 100 while using the third lens L3 to expand the peripheral field of view light, thereby reducing the eccentricity sensitivity of the optical lens 100, which is beneficial to improving the production yield of the optical lens 100 and achieving the miniaturization design of the optical lens 100.

In some embodiments, the optical lens 100 may satisfy the following conditional expression: $0.5 \leq CT4/CT5 \leq 4.62$. Wherein, CT4 is a thickness of the fourth lens L4 at the optical axis O, and CT5 is a thickness of the fifth lens L5 at the optical axis O. In some embodiments, $0.503 \leq CT4/CT5 \leq 4.377$. When the optical lens 100 satisfies the above conditional expression, by reasonably configuring a ratio of the thickness of the fourth lens L4 to the fifth lens L5, the length of the fourth lens L4 and the fifth lens L5 after being cemented can be reduced, which is beneficial to the miniaturization design of the optical lens 100.

In some embodiments, the optical lens 100 may satisfy the following conditional expression: $-2 \leq F5/F4 \leq -1$. Wherein, F5 is an effective focal length of the fifth lens L5. In some embodiments, $-1.683 \leq F5/F4 \leq -1.036$. When the optical lens 100 satisfies the above conditional expression, by reasonably configuring a ratio of the effective focal length F5 of the fifth lens L5 to the effective focal length F4 of the fourth lens L4, it can avoid introducing excessive spherical aberration from the fourth lens L4 and the fifth lens L5 and effectively correct aberrations, thereby improving the resolution capability of the optical lens 100 and reducing the length of the fourth lens L4 and the fifth lens L5 after being cemented.

In some embodiments, the optical lens 100 may satisfy the following conditional expression: $0.95 \leq R3/(R4+CT2) \leq 1.7$. Wherein, R3 is a radius of curvature of the object side surface S3 of the second lens L2 at the optical axis O, R4 is a radius of curvature of the imaging side surface S4 of the second lens L2 at the optical axis O, and CT2 is a thickness of the second lens L2 at the optical axis O. In some embodiments, $0.997 \leq R3/(R4+CT2) \leq 1.681$. When the optical lens 100 satisfies the above conditional expression, by reasonably configuring a ratio of R3, R4, and CT2, it is beneficial to allow the shape of the second lens L2 to approach a concentric circle, facilitate a smooth transition of the light passing through the second lens L2, and help reduce the front aperture of the optical lens 100 and the volume of the optical lens 100, which is conducive to achieving a miniaturized design of the optical lens 100 and reducing costs.

In some embodiments, the optical lens 100 may satisfy the following conditional expression: $1.6 \text{ mm}^{-1} \leq |(Vd4-Vd5)/F45| \leq 3.4 \text{ mm}^{-1}$. Wherein, Vd4 is an Abbe number of the fourth lens L4, Vd5 is an Abbe number of the fifth lens L5, and F45 is a combined effective focal length of the fourth lens L4 and the fifth lens L5. In some embodiments, $1.661 \text{ mm}^{-1} \leq |(Vd4-Vd5)/F45| \leq 3.301 \text{ mm}^{-1}$. When the optical lens 100 satisfies the above conditional expression, by reasonably configuring a ratio of a difference between the Abbe number of the fourth lens L4 and the Abbe number of the fifth lens L5 to the combined effective focal length F45, it can effectively correct chromatic aberration of the optical system, restore the authenticity of chromatic aberration, and improve the resolution capability and imaging quality of the optical lens 100.

In some embodiments, the optical lens 100 may satisfy the following conditional expression: $2.9 \leq F45/F \leq 6.2$. In some embodiments, $2.993 \leq F45/F \leq 6.183$. When the optical lens 100 satisfies the above conditional expression, by appropriately configuring a ratio of the effective combined focal length F45 of the fourth lens L4 and the fifth lens L5 to the effective focal length F of the optical lens 100, it is beneficial to correct chromatic aberration and balance various aberrations, improve the resolution capability of the optical lens 100, and effectively reduce the tolerance sensitivity, thereby enhancing the imaging quality of the optical lens 100.

In some embodiments, the optical lens 100 may satisfy the following conditional expression: $1.4 \leq CT4/ET4 \leq 2.7$. Wherein, ET4 is a distance along the optical axis O from the maximum effective aperture of the object side surface S7 of the fourth lens L4 to the maximum effective aperture of the imaging side surface S8 of the fourth lens L4. In some embodiments, $1.402 \leq CT4/ET4 \leq 2.678$. When the optical lens 100 satisfies the above conditional expression, by reasonably configuring a ratio of CT4 to ET4 and reasonably controlling a ratio of the center thickness to the edge thickness of the fourth lens L4, the overall thickness of the fourth lens L4 can be reasonable, which is convenient for cementing the fourth lens L4 with the fifth lens L5 while also enabling the miniaturization design of the optical lens 100.

In some embodiments, the optical lens 100 may satisfy the following conditional expression: $|R5/R6| \leq 0.55$. Wherein, R5 is a radius of curvature of the object side surface S5 of the third lens L3 at the optical axis O, and R6 is a radius of curvature of the imaging side surface S6 of the third lens L3 at the optical axis O. In some embodiments, $0.086 \leq |R5/R6| \leq 0.541$. When the optical lens 100 satisfies the above conditional expression, by reasonably configuring a ratio of the radii of curvature of the object side surface S5 and the imaging side surface S6 of the third lens L3, the distribution of the refractive power of the third lens L3 of the optical lens 100 can be uniform, which is beneficial for correcting the distortion and aberration generated by the first lens L1 and the second lens L2, reducing the sensitivity of performance changes of the optical lens 100, and improving the resolution capability.

In some embodiments, the optical lens 100 may satisfy the following conditional expression: $0.3 \leq R11/R12 \leq 1.4$. Wherein, R11 is a radius of curvature of the object side surface S11 of the sixth lens L6 at the optical axis O, and R12 is a radius of curvature of the imaging side surface S12 of the sixth lens L6 at the optical axis O. In some embodiments, $0.330 \leq R11/R12 \leq 1.371$. When the optical lens 100 satisfies the above conditional expression, by reasonably configuring a ratio of the radii of curvature of the object side surface S11 and the imaging side surface S12 of the sixth lens L6, the distribution of the refractive power of the sixth lens L6 of the optical lens 100 can be uniform, which is beneficial for correcting the distortion and aberration generated by the first lens L1, the second lens L2, the third lens L3, the fourth lens L4, and the fifth lens L5, reducing the sensitivity of performance changes of the optical lens 100, and improving the resolution capability.

In some embodiments, the optical lens 100 may satisfy the following conditional expression: $1.3 \leq CT6/CT56 \leq 33$. Wherein, CT6 is a thickness of the sixth lens L6 at the optical axis O, and CT56 is a distance between the imaging side surface S10 of the fifth lens L5 and the object side surface S11 of the sixth lens L6 at the optical axis O. In some embodiments, $1.371 \leq CT6/CT56 \leq 32.639$. When the optical lens 100 satisfies the above conditional expression, by reasonably configuring a ratio of CT6 to CT56, the thickness of the sixth lens L6 can be effectively controlled, which is beneficial for achieving the miniaturization design of the optical lens 100.

In some embodiments, the optical lens 100 may satisfy the following conditional expression: $2.1 \leq F*\tan(FOV/2)/ImgH \leq 2.55$. In some embodiments, $2.170 \leq F*\tan(FOV/2)/ImgH \leq 2.503$. When the optical lens 100 satisfies the above conditional expression, by reasonably configuring a ratio of F, FOV and ImgH, the optical lens 100 can be miniaturized, and at the same time, it can have the characteristic of a large field of view.

In some embodiments, the optical lens 100 may satisfy the following conditional expression: $-63 \leq \arctan(1/K12) \leq -57$. Wherein, K12 is an edge slope of the imaging side surface S12 of the sixth lens L6 corresponding to the maximum field of view angle of the optical lens 100. In some embodiments, $-62.668 \leq \arctan(1/K12) \leq -57.668$. When the optical lens 100 satisfies the above conditional expression, a field angle of a central area of the imaging side surface S12 of the sixth lens L6 is a field angle bending towards the imaging side surface S12, and a field angle of an edge area is zero or a field angle bending towards the object side surface S. Thus, the central area and the edge area of the imaging side surface S12 of the sixth lens L6 have different field angles, and there is a reverse curvature point on the imaging side surface S12 of the sixth lens L6, which is beneficial for correcting astigmatism and field curvature, and improving the resolution capability of the optical lens 100.

In some embodiments, the optical lens 100 may satisfy the following conditional expression: $6.7 \leq TTL/ImgH \leq 6.8$. In some embodiments, $6.732 \leq TTL/ImgH \leq 6.758$. When the optical lens 100 satisfies the above conditional expression, by reasonably configuring a ratio of TTL and ImgH, the optical lens 100 can meet the requirements of high pixel and miniaturization at the same time.

In some embodiments, the optical lens 100 may satisfy the following conditional expression: $0.05 \leq TTL/ImgH/FOV \leq 0.06$. In some embodiments, $0.053 \leq TTL/ImgH/FOV \leq 0.059$. When the optical lens 100 satisfies the above conditional expression, by reasonably configuring a ratio of TTL, ImgH and FOV, it can meet the requirements of the optical lens 100 being adapted to a large-sized image plane IMG and miniaturization at the same time, so that the optical lens 100 can meet both the requirements of a large image plane IMG and miniaturization.

In some embodiments, the optical lens 100 may satisfy the following conditional expression: $1.5 \leq FNO \leq 1.8$. Wherein, FNO is an aperture number of the optical lens 100. In some embodiments, $1.6 \leq FNO \leq 1.7$, and even further, $1.617 \leq FNO \leq 1.68$. When the optical lens 100 satisfies the above conditional expression, by reasonably configuring FNO within the range of 1.5 to 1.8, the optical lens 100 acquires the characteristic of a large aperture, thereby ensuring sufficient light intake for the optical lens 100, which enables the optical lens 100 to capture clearer images, thereby allowing the optical lens 100 to be suitable for shooting high-quality night scenes, starry skies, and other low-light environments.

In some embodiments, the optical lens 100 may satisfy the following conditional expression: $F2/F \leq -6$. In some embodiments, $-117.629 \leq F2/F \leq -6.755$. When the optical lens 100 satisfies the above conditional expression, by reasonably configuring a ratio of the effective focal length F2 of the second lens L2 to the effective focal length F of the optical lens 100, it avoids introducing excessive spherical aberration by the second lens L2 and effectively corrects aberrations, which is beneficial for improving the resolution capability of the optical lens 100.

In some embodiments, the optical lens 100 may satisfy the following conditional expression: $-2.1 \leq F5/F \leq -1.4$. In some embodiments, $-2.002 \leq F5/F \leq -1.413$. When the optical lens 100 satisfies the above conditional expression, by reasonably configuring a ratio of the effective focal length F5 of the fifth lens L5 to the effective focal length F of the optical lens 100, it avoids introducing excessive spherical aberration by the fifth lens L5 and effectively corrects aberrations, which is beneficial for improving the resolution capability of the optical lens 100.

In some embodiments, the optical lens 100 may satisfy the following conditional expression: $4.5 \leq |F6/F| \leq 30$. Wherein, F6 is an effective focal length of the sixth lens L6. In some embodiments, $4.709 \leq |F6/F| \leq 29.057$. When the optical lens 100 satisfies the above conditional expression, by properly configuring a ratio of the effective focal length F6 of the sixth lens L6 to the effective focal length F of the optical lens 100, it avoids introducing excessive spherical aberration by the sixth lens L6 and effectively corrects aberrations, which is beneficial for improving the resolution capability of the optical lens 100.

In some embodiments, the optical lens 100 may satisfy the following conditional expression: $F2/CT2 \leq -6$. In some embodiments, $-108.628 \leq F2/CT2 \leq -6.535$. When the optical lens 100 satisfies the above conditional expression, by reasonably configuring a ratio of the effective focal length F2 of the second lens L2 to the thickness CT2 of the second lens L2, the deflection angle of the light in the optical lens 100 can be effectively controlled, so that the light is allowed to be projected gently after passing through the second lens L2, thereby reducing the field curvature and astigmatism of the optical lens 100 and facilitating the reduction of the distortion of the optical lens 100.

In some embodiments, the optical lens 100 may satisfy the following conditional expression: $1.3 \leq F3/CT3 \leq 7.1$. Wherein, CT3 is a thickness of the third lens L3 at the optical axis O. In some embodiments, $1.373 \leq F3/CT3 \leq 7.097$. When the optical lens 100 satisfies the above conditional expression, by reasonably configuring a ratio of the effective focal length F3 of the third lens L3 to the thickness CT3 of the third lens L3, the light that is projected smoothly after passing through the second lens L2 can be converged, thereby reducing the eccentricity sensitivity of the optical lens 100 and facilitating the improvement of the resolution of the optical lens 100.

In some embodiments, the optical lens 100 may satisfy the following conditional expression: $1.1 \leq F4/CT4 \leq 2.8$. In some embodiments, $1.150 \leq F4/CT4 \leq 2.748$. When the optical lens 100 satisfies the above conditional expression, by reasonably configuring a ratio of the effective focal length F4 of the fourth lens L4 to the thickness CT4 of the fourth lens L4, it is beneficial to reduce the chromatic aberration of the optical lens 100 and facilitate the improvement of the resolution of the optical lens 100.

In some embodiments, the optical lens 100 may satisfy the following conditional expression: $-9 \leq F5/CT5 \leq -2$. In some embodiments, $-8.458 \leq F5/CT5 \leq -2.328$. When the optical lens 100 satisfies the above conditional expression, by reasonably configuring a ratio of the effective focal length F5 of the fifth lens L5 to the thickness CT5 of the fifth lens L5, the fifth lens L5 can effectively correct the aberration caused by the deflection of light by the previous lenses, which is beneficial to improving the resolution ability of the optical lens 100.

In some embodiments, the optical lens 100 may satisfy the following conditional expression: $12 \leq |F6/CT6| \leq 65$. In some embodiments, $12.458 \leq |F6/CT6| \leq 62.657$. When the optical lens 100 satisfies the above conditional expression, by reasonably configuring a ratio of the effective focal length F6 of the sixth lens L6 to the thickness CT6 of the sixth lens L6, it can avoid the effective focal length of the sixth lens L6 being too large and causing astigmatism that is difficult to correct, which is conducive to improving the resolution of the optical lens 100.

In some embodiments, the optical lens 100 may satisfy the following conditional expression: $1.6 \leq R1/R2 \leq 1.85$. Wherein, R1 is a radius of curvature of the object side surface S1 of the first lens L1 at the optical axis O, and R2 is a radius of curvature of the imaging side surface S2 of the first lens L1 at the optical axis O. In some embodiments, $1.646 \leq R1/R2 \leq 1.822$. When the optical lens 100 satisfies the above conditional expression, by reasonably configuring a ratio of the radii of curvature of the object side surface S1 and the imaging side surface S2 of the first lens L1, the distribution of the refractive power of the first lens L1 of the optical lens 100 can be uniform, and the effective aperture of the first lens L1 of the optical lens 100 can be effectively controlled, which is conducive to achieving a wide field of view of the optical lens 100.

In some embodiments, the optical lens 100 may satisfy the following conditional expression: $0.55 \leq R3/R4 \leq 0.75$.

In some embodiments, 0.580≤R3/R4≤0.733. When the optical lens 100 satisfies the above conditional expression, by reasonably configuring the ratio of the curvature radii of the object side surface S3 and the imaging side surface S4 of the second lens L2, the distribution of the refractive power of the second lens L2 of the optical lens 100 can be uniform, which is beneficial to reducing the field curvature and astigmatism of the optical lens 100 and minimizing distortion.

In some embodiments, the optical lens 100 may satisfy the following conditional expression: -2≤R7/R8≤-1. Wherein, R7 is a curvature radius of the object side surface S7 of the fourth lens L4 at the optical axis O, and R8 is a curvature radius of the imaging side surface S8 of the fourth lens L4 at the optical axis O. In some embodiments, -1.976≤R7/R8≤-1.002. When the optical lens 100 satisfies the above conditional expression, by reasonably configuring a ratio of the curvature radii of the object side surface S7 and the imaging side surface S8 of the fourth lens L4, the distribution of the refractive power of the fourth lens L4 of the optical lens 100 can be uniform, which is beneficial to reducing chromatic aberration and spherical aberration, lowering the sensitivity of the performance of the optical lens 100, and improving the resolution capability.

In some embodiments, the optical lens 100 may satisfy the following conditional expression: |R9/R10|≤0.4. Wherein, R9 is a curvature radius of the object side surface S9 of the fifth lens L5 at the optical axis O, and R10 is a curvature radius of the imaging side surface S10 of the fifth lens L5 at the optical axis O. In some embodiments, 0.036≤|R9/R10|≤0.038. When the optical lens 100 satisfies the above conditional expression, by reasonably configuring a ratio of the curvature radii of the object side surface S9 and the imaging side surface S10 of the fifth lens L5, the distribution of the refractive power of the fifth lens L5 of the optical lens 100 can be uniform, which is beneficial to correcting the distortion and aberration generated by the first lens L1, the second lens L2, the third lens L3, and the fourth lens L4, lowering the sensitivity of the performance of the optical lens 100, and improving the resolution capability of the optical lens 100.

In some embodiments, the optical lens 100 may satisfy the following conditional expression: 0.55≤CT1/ET1≤0.7. Wherein, ET1 is a distance along the optical axis O from the maximum effective aperture of the object side surface S1 of the first lens L1 to the maximum effective aperture of the imaging side surface S2 of the first lens L1. In some embodiments, 0.56≤CT1/ET1≤0.69. When the optical lens 100 satisfies the above conditional expression, by reasonably configuring a ratio of CT1 to ET1 and reasonably controlling a ratio of the center thickness to the edge thickness of the first lens L1, the overall thickness of the first lens L1 can be reasonable, which is conducive to the miniaturization design of the optical lens 100.

In some embodiments, the optical lens 100 may satisfy the following conditional expression: 0.95≤CT2/ET2≤1. Wherein, ET2 is a distance along the optical axis O from the maximum effective aperture of the object side surface S3 of the second lens L2 to the maximum effective aperture of the imaging side surface S4 of the second lens L2. In some embodiments, 0.96≤CT2/ET2≤0.98. When the optical lens 100 satisfies the above conditional expression, by reasonably configuring a ratio of CT2 to ET2 and reasonably controlling a ratio of the center thickness to the edge thickness of the second lens L2, the overall thickness of the second lens L2 can be reasonable, which is conducive to the miniaturization design of the optical lens 100.

In some embodiments, the optical lens 100 may satisfy the following conditional expression: 1.1≤CT3/ET3≤1.95. Wherein, ET3 is a distance along the optical axis O from the maximum effective aperture on the object side surface S5 of the third lens L3 to the maximum effective aperture on the imaging side surface S6 of the third lens L3. In some embodiments, 1.114≤CT3/ET3≤1.926. When the optical lens 100 satisfies the above conditional expression, by reasonably configuring a ratio of CT3 to ET3 and reasonably controlling a ratio of the center thickness to the edge thickness of the third lens L3, the overall thickness of the third lens L3 can be reasonable, which is conducive to the miniaturization design of the optical lens 100.

In some embodiments, the optical lens 100 may satisfy the following conditional expression: 0.45≤CT5/ET5≤0.91. Wherein, ET5 is a distance along the optical axis O from the maximum effective aperture on the object side surface S9 of the fifth lens L5 to the maximum effective aperture on the imaging side surface S10 of the fifth lens L5. In some embodiments, 0.488≤CT5/ET5≤0.905. When the optical lens 100 satisfies the above conditional expression, by reasonably configuring a ratio of CT5 to ET5 and reasonably controlling a ratio of the center thickness to the edge thickness of the fifth lens L5, the overall thickness of the fifth lens L5 can be reasonable, which is conducive to the fifth lens L5 being cemented to the fourth lens L4 while also achieving the miniaturization design of the optical lens 100.

In some embodiments, the optical lens 100 may satisfy the following conditional expression: 1≤CT6/ET6≤1.4. Wherein, ET6 is a distance along the optical axis O from the maximum effective aperture on the object side surface S11 of the sixth lens L6 to the maximum effective aperture on the imaging side surface S12 of the sixth lens L6. In some embodiments, 1.047≤CT6/ET6≤1.385. When the optical lens 100 satisfies the above conditional expression, by rationally configuring a ratio of CT6 to ET6 and reasonably controlling a ratio of the central thickness to the edge thickness of the sixth lens L6, the overall thickness of the sixth lens L6 can be reasonable, which is conducive to achieving a miniaturized design of the optical lens 100.

The surface shape of each aspherical lens can be defined by, but not limited to, the following aspherical formula:

$$Z = \frac{cr^2}{1 + \sqrt{1 - (k+1)c^2r^2}} + \sum Air^i$$

.

Wherein, Z is a distance from the corresponding point on the aspheric surface to the plane tangent to the surface vertex; c is a curvature of the vertex of the aspheric surface, and c=1/Y, Y is the radius of curvature (that is, the curvature of the vertex of the aspheric surface c is the reciprocal of the Y radius); r is the distance from the corresponding point on the aspheric surface to the optical axis; k is the cone coefficient; Ai is the coefficient corresponding to the i-th higher-order term of the aspheric surface.

The optical lens 100 of the present disclosure will be described in detail below with reference to specific parameters.

First embodiment

FIG. 1 is a schematic structural diagram of the optical lens 100 of the first embodiment, the optical lens 100 sequentially includes a first lens L1, a second lens L2, an aperture STO, a third lens L3, a fourth lens L4, a fifth lens L5, a sixth lens L6, a filter IR, and a protective glass CG along an optical axis O from an object side to an imaging side.

Further, the first lens L1 has negative refractive power, the second lens L2 has negative refractive power, third lens L3 has positive refractive power, the fourth lens L4 has positive refractive power, the fifth lens L5 has negative refractive power, and the sixth lens L6 has positive refractive power.

Furthermore, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is convex near the optical axis O, an imaging side surface S8 of the fourth lens L4 is convex near the optical axis O, an object side surface S9 of the fifth lens L5 is concave near the optical axis O, an imaging side surface S10 of the fifth lens L5 is convex near the optical axis O, an object side surface S11 of the sixth lens L6 is convex near the optical axis O, and an imaging side surface S12 of the sixth lens L6 is concave near the optical axis O.

The Y radius in Table 1a is the curvature radius of the object side surface or the imaging side surface of the corresponding surface number at the optical axis O. The first value in the "Thickness" parameter column of a lens is the thickness of the lens at the optical axis O, and the second value is a distance from the imaging side surface of the lens to a rear surface in an imaging side direction on the optical axis O. The value of the aperture STO in the "Thickness" parameter column is a distance from the aperture STO to a vertex of a latter surface in an imaging side direction (the vertex refers to an intersection point of the latter surface and the optical axis O) on the optical axis O, and by default, a direction from the object side surface of the first lens L1 to the imaging side surface of the last lens is a positive direction of the optical axis O. When the value of the aperture STO in the "Thickness" parameter column is negative, it means that the aperture STO is arranged on the imaging side of the vertex of the latter surface. When the value of the aperture STO in the "Thickness" parameter column is a positive value, the aperture STO is arranged on the object side of the vertex of the latter surface. It can be understood that the units of the Y radius, the thickness, and the effective focal length in Table 1a are all mm, the reference wavelength for the refractive index, Abbe number, and the effective focal length of each lens in Table 1a is 558 nm.

In the first embodiment, the object side surface and the imaging side surface of the first lens L1 and the object side surface and the imaging side surface of the sixth lens L6 are both aspherical. Table 1b shows the cone coefficient and the higher-order term coefficients A4, A6, A8, A10, A12, A14, A16, A18, and A20 that can be used for each aspherical lens in the first embodiment.

Table 1a

| First embodiment | | | | | | | | |
|---|---|---|---|---|---|---|---|---|
| F=5.11mm, FNO=1.62, FOV=121° | | | | | | | | |
| Surface number | Name | Surface type | Y radius | Thickness | Material | Refractive index | Abbe number | Effective focal length |
| Object side | | | infinity | infinity | | | | |
| 1 | First lens | asphere | 4.575 | 1.008 | glass | 1.806 | 40.920 | -8.805 |
| 2 | | asphere | 2.511 | 2.296 | | | | |
| 3 | Second lens | sphere | -6.611 | 4.768 | glass | 2.001 | 25.426 | -35.727 |
| 4 | | sphere | -11.030 | 0.500 | | | | |
| 5 | Aperture | sphere | infinity | -0.404 | | | | |
| 6 | Third lens | sphere | 10.164 | 2.895 | glass | 1.744 | 44.904 | 9.897 |
| 7 | | sphere | -23.783 | 2.521 | | | | |
| 8 | Fourth lens | sphere | 9.837 | 4.235 | glass | 1.593 | 68.342 | 6.227 |
| 9 | Fifth lens | sphere | -4.979 | 2.637 | glass | 1.923 | 18.896 | -10.236 |
| 10 | | sphere | -13.094 | 0.097 | | | | |
| 11 | Sixth lens | asphere | 12.600 | 3.178 | glass | 1.616 | 63.720 | 74.145 |
| 12 | | asphere | 15.705 | 0.750 | | | | |
| 13 | IR | sphere | infinity | 0.500 | glass | 1.523 | 54.517 | |
| 14 | | sphere | infinity | 1.500 | | | | |
| 15 | CG | sphere | infinity | 0.300 | glass | 1.523 | 54.517 | |
| 16 | | sphere | infinity | 0.398 | | | | |
| 17 | IMG | sphere | infinity | 0.000 | | | | |

Table 1b

| First embodiment | | | | | | | | | |
|---|---|---|---|---|---|---|---|---|---|
| Aspheric coefficient | | | | | | | | | |
| Surface number | K | A4 | A6 | A8 | A10 | A12 | A14 | A16 | A18 | A20 |
| 1 | 1.1209E+ 00 | -5.1979E - 03 | -1.2875E-04 | 4.3859E-05 | -2.6527E-06 | -2.8922E-08 | 1.1815E-08 | -5.5055E-10 | 6.5179E-12 | 8.5624E-14 |
| 2 | 1.2743E+ 00 | -4.1910E - 03 | -1.0199E-04 | 5.8526E-05 | 8.2154E-07 | -1.3438E-07 | -8.4980E-08 | -2.3008E-09 | 2.6197E-09 | -1.7170E-10 |
| 11 | - 2.5482E+ 01 | 3.4958E - 04 | -5.8758E-05 | -2.3334E-06 | 5.7187E-07 | -2.3775E-08 | -2.0306E-09 | 2.3295E-10 | -7.4290E-12 | 5.8496E-14 |
| 12 | 3.0964E+ 01 | -8.3778E - 04 | -4.0019E-04 | 1.2765E-06 | 3.3878E-08 | -5.3734E-09 | 7.0050E-12 | 2.1771E-11 | -7.3423E-13 | 4.6447E-16 |

Referring to (A) of FIG. 2, (A) of FIG. 2 shows a longitudinal spherical aberration diagram of the optical lens 100 in the first embodiment at wavelengths of 661 nm, 614 nm, 558 nm, 502 nm, and 435 nm. Wherein, the abscissa along the X-axis direction represents the deviation of the focus point in mm, and the ordinate along the Y-axis direction represents the normalized field of view. It can be seen from (A) in Figure 2 that the spherical aberration value of the optical lens 100 in the first embodiment is well, indicating that the imaging quality of the optical lens 100 in this embodiment is well. Referring to (B) of FIG. 2, (B) of FIG. 2 is an astigmatism curve diagram of the optical lens 100 in the first embodiment at a wavelength of 558 nm. Wherein, the abscissa along the X-axis direction represents the deviation of the focus point in mm, and ordinate along the Y-axis direction represents the field of view angle in deg. T in the astigmatism curve diagram represents the curvature of the image plane IMG in the tangential direction, and S represents the curvature of the image plane IMG in the sagittal direction. It can be seen from (B) of FIG. 2 that at this wavelength, astigmatism of the optical lens 100 is well compensated. Referring to (C) of FIG. 2, (C) of FIG. 2 is a distortion diagram of the optical lens 100 in the first embodiment at a wavelength of 558 nm. Wherein, the abscissa along the X-axis direction represents the distortion in %, and the ordinate along the Y-axis direction represents the field of view in deg. It can be seen from (C) of FIG. 2 that this wavelength, the distortion of the optical lens 100 is well corrected.

Second embodiment

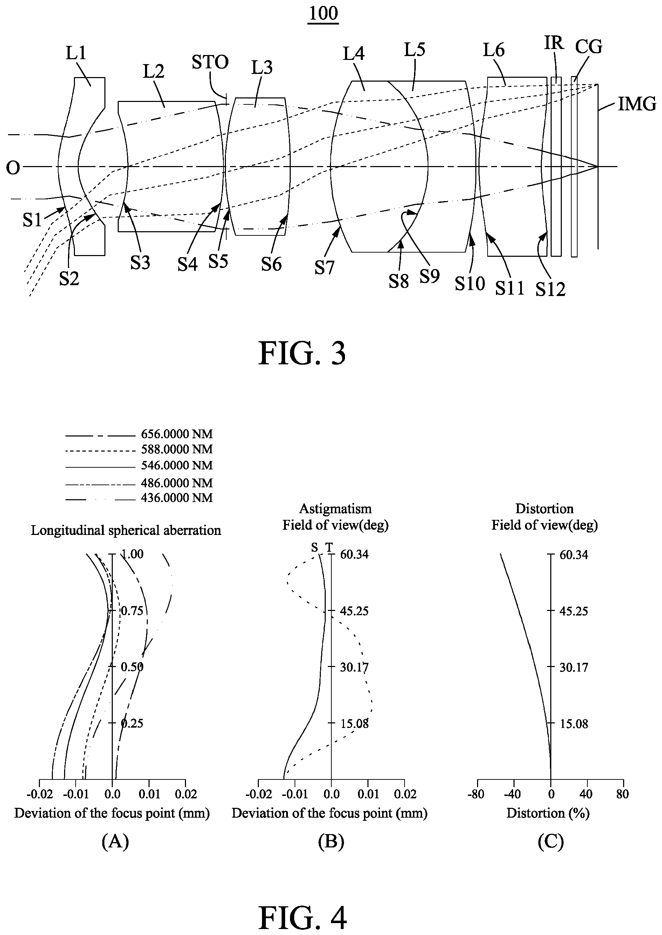

FIG. 3 is a schematic structural diagram of the optical lens 100 of the second embodiment. The optical lens 100 sequentially includes a first lens L1, a second lens L2, an aperture STO, a third lens L3, a fourth lens L4, a fifth lens L5, a sixth lens L6, a filter IR, and a protective glass CG along an optical axis O from an object side to an imaging side.

Further, the first lens L1 has negative refractive power, the second lens L2 has negative refractive power, third lens L3 has positive refractive power, the fourth lens L4 has positive refractive power, the fifth lens L5 has negative refractive power, and the sixth lens L6 has positive refractive power.

Furthermore, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is convex near the optical axis O, an imaging side surface S8 of the fourth lens L4 is convex near the optical axis O, an object side surface S9 of the fifth lens L5 is concave near the optical axis O, an imaging side surface S10 of the fifth lens L5 is convex near the optical axis O, an object side surface S11 of the sixth lens L6 is convex near the optical axis O, and an imaging side surface S12 of the sixth lens L6 is concave near the optical axis O.

Other parameters of the second embodiment are given in Table 2a, and the definition of each parameter can be obtained from the description of the foregoing embodiment and will not be described again here. It can be understood that the units of Y radius, thickness, and effective focal length in Table 2a are all mm, the reference wavelength for the refractive index, Abbe number, and the effective focal length of each lens in Table 2a is 558 nm.

In the second embodiment, the object side surface and the imaging side surface of the first lens L1 and the object side surface and the imaging side surface of the sixth lens L6 are both aspherical. Table 2b shows the cone coefficient and the higher-order term coefficients A4, A6, A8, A10, A12, A14, A16, A18, and A20 that can be used for each aspherical lens in the second embodiment.

Table 2a

| Second embodiment | | | | | | | | |
|---|---|---|---|---|---|---|---|---|
| F=5.12mm, FNO=1.62, FOV=120.68° | | | | | | | | |
| Surface number | Name | Surface type | Y radius | Thickness | Material | Refractive index | Abbe number | Effective focal length |
| Object side | | | infinity | infinity | | | | |
| 1 | First lens | asphere | 4.392 | 1.009 | glass | 1.806 | 40.920 | -9.267 |
| 2 | | asphere | 2.487 | 2.503 | | | | |
| 3 | Second lens | sphere | -7.286 | 4.803 | glass | 2.001 | 25.458 | -36.195 |
| 4 | | sphere | -12.113 | 0.139 | | | | |
| 5 | Aperture | sphere | infinity | -0.040 | | | | |

(continued)

| Second embodiment | | | | | | | | |
|---|---|---|---|---|---|---|---|---|
| F=5.12mm, FNO=1.62, FOV=120.68° | | | | | | | | |
| Surface number | Name | Surface type | Y radius | Thickness | Material | Refractive index | Abbe number | Effective focal length |
| Object side | | | infinity | infinity | | | | |
| 6 | Third lens | sphere | 11.109 | 3.256 | glass | 1.744 | 44.900 | 10.079 |
| 7 | | sphere | -20.515 | 2.203 | | | | |
| 8 | Fourth lens | sphere | 8.611 | 4.909 | glass | 1.593 | 68.624 | 6.367 |
| 9 | Fifth lens | sphere | -5.324 | 2.422 | glass | 1.923 | 18.896 | -9.480 |
| 10 | | sphere | -16.279 | 0.147 | | | | |
| 11 | Sixth lens | asphere | 10.982 | 3.131 | glass | 1.616 | 63.720 | 148.825 |
| 12 | | asphere | 11.112 | 0.500 | | | | |
| 13 | IR | sphere | infinity | 0.500 | glass | 1.523 | 54.517 | |
| 14 | | sphere | infinity | 0.500 | | | | |
| 15 | CG | sphere | infinity | 0.300 | glass | 1.523 | 54.517 | |
| 16 | | sphere | infinity | 1.048 | | | | |
| 17 | IMG | sphere | infinity | 0.000 | | | | |

Table 1b

| Second embodiment | | | | | | | | | |
|---|---|---|---|---|---|---|---|---|---|
| Aspheric coefficient | | | | | | | | | |
| Surface number | K | A4 | A6 | A8 | A10 | A12 | A14 | A16 | A18 | A20 |
| 1 | 1.5814E+00 | -4.8548E-03 | -9.0935E-05 | 3.4222E-05 | -2.2139E-06 | 5.5051E-08 | 1.1417E-10 | -2.0103E-11 | 1.5814E+00 | -4.8548E-03 |
| 2 | 1.0591E+00 | -6.5412E-03 | -7.3374E-05 | 8.0909E-05 | -5.7849E-06 | 7.5791E-08 | 5.9953E-09 | 1.9956E-10 | 1.0591E+00 | -6.5412E-03 |
| 11 | 1.5463E+00 | -1.2833E-03 | 6.1564E-05 | -1.0002E-05 | 9.1586E-07 | -5.0594E-08 | 1.4835E-09 | -1.4775E-11 | 1.5463E+00 | -1.2833E-03 |
| 12 | 3.2041E+00 | -2.0593E-03 | 1.2765E-04 | -1.8901E-05 | 1.8077E-07 | -1.0783E-07 | 3.6638E-09 | -5.1275E-11 | 3.2041E+00 | -2.0593E-03 |

Referring to FIG. 4, it can be seen from (A) a longitudinal spherical aberration diagram, (B) an astigmatism curve diagram, and (C) a distortion diagram in FIG. 4 that, the spherical aberration value, astigmatism, and distortion of the optical lens 100 of the second embodiment are well controlled, so that the optical lens 100 of this embodiment has a good imaging quality. In addition, regarding the wavelengths corresponding to the curves in (A) in Figure 4, (B) in Figure 4, and (C) in Figure 4, please refer to the contents described in (A) in Figure 2, (B) in Figure 2, and (C) in Figure 2 in the first embodiment and will not be described again here.

Third embodiment

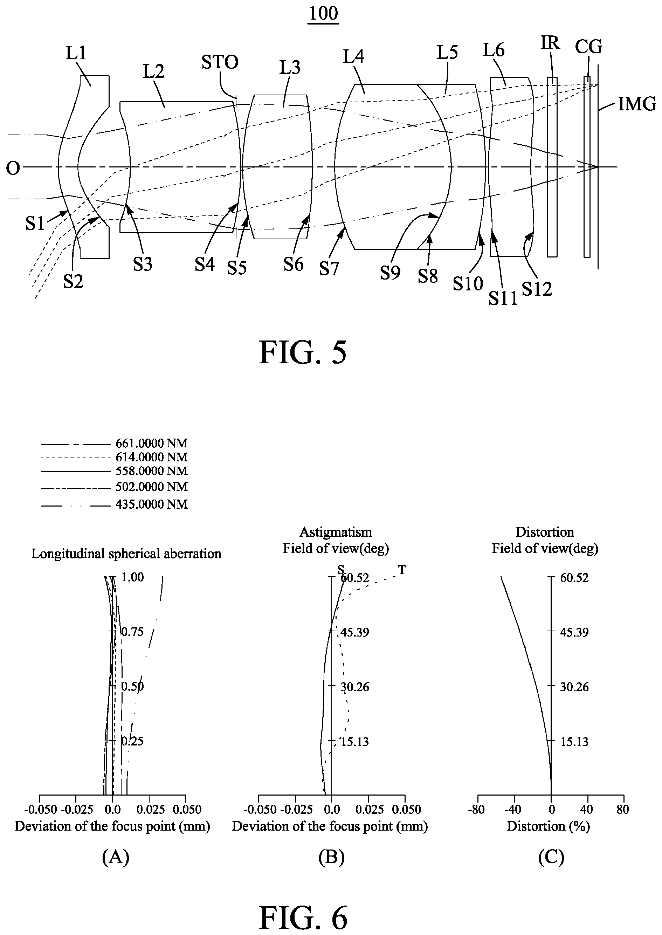

FIG. 5 is a schematic structural diagram of the optical lens 100 of the third embodiment. The optical lens 100 sequentially includes a first lens L1, a second lens L2, an aperture STO, a third lens L3, a fourth lens L4, a fifth lens L5, a sixth lens L6, a filter IR, and a protective glass CG along an optical axis O from an object side to an imaging side.
Further, the first lens L1 has negative refractive power, the second lens L2 has negative refractive power, third lens L3 has positive refractive power, the fourth lens L4 has positive refractive power, the fifth lens L5 has negative refractive power, and the sixth lens L6 has positive refractive power.
Furthermore, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is convex near the optical axis O, an imaging side surface S8 of the fourth lens L4 is convex near the optical axis O, an object side surface S9 of the fifth lens L5 is concave near the optical axis O, an imaging side surface S10 of the fifth lens L5 is convex near the optical axis O, an object side surface S11 of the sixth lens L6 is convex near the optical axis O, and an imaging side surface S12 of the sixth lens L6 is concave near the optical axis O.
Other parameters of the third embodiment are given in Table 3a, and the definition of each parameter can be obtained from the description of the foregoing embodiment and will not be described again here. It can be understood that the units of Y radius, thickness, and effective focal length in Table 3a are all mm, the reference wavelength for the refractive index, Abbe number, and the effective focal length of each lens in Table 3a is 558 nm.
In the third embodiment, the object side surface and the imaging side surface of the first lens L1 and the object side surface and the imaging side surface of the sixth lens L6 are both aspherical. Table 3b shows the cone coefficient and the higher-order term coefficients A4, A6, A8, A10, A12, A14, A16, A18, and A20 that can be used for each aspherical lens in the third embodiment.

Table 3a

| Third embodiment | | | | | | | | |
|---|---|---|---|---|---|---|---|---|
| F=5.09mm, FNO=1.62, FOV=121.04° | | | | | | | | |
| Surface number | Name | Surface type | Y radius | Thickness | Material | Refractive index | Abbe number | Effective focal length |
| Object side | | | infinity | infinity | | | | |
| 1 | First lens | asphere | 3.764 | 1.000 | glass | 1.806 | 40.919 | -10.334 |
| 2 | | asphere | 2.287 | 2.644 | | | | |
| 3 | Second lens | sphere | -7.407 | 5.547 | glass | 2.003 | 28.316 | -36.249 |
| 4 | | sphere | -12.781 | -0.234 | | | | |
| 5 | Aperture | sphere | infinity | 0.334 | | | | |
| 6 | Third lens | sphere | 10.836 | 3.494 | glass | 1.692 | 54.539 | 10.925 |
| 7 | | sphere | -21.933 | 1.125 | | | | |
| 8 | Fourth lens | sphere | 8.584 | 5.853 | glass | 1.593 | 68.342 | 6.730 |
| 9 | Fifth lens | sphere | -5.584 | 1.733 | glass | 1.946 | 17.942 | -9.938 |
| 10 | | sphere | -15.637 | 0.152 | | | | |

(continued)

| Third embodiment | | | | | | | | |
|---|---|---|---|---|---|---|---|---|
| F=5.09mm, FNO=1.62, FOV=121.04° | | | | | | | | |
| Surface number | Name | Surface type | Y radius | Thickness | Material | Refractive index | Abbe number | Effective focal length |
| Object side | | | infinity | infinity | | | | |
| 11 | Sixth lens | asphere | 11.999 | 2.000 | glass | 1.616 | 63.719 | 125.339 |
| 12 | | asphere | 13.295 | 0.950 | | | | |
| 13 | IR | sphere | infinity | 0.500 | glass | 1.523 | 54.517 | |
| 14 | | sphere | infinity | 1.350 | | | | |
| 15 | CG | sphere | infinity | 0.300 | glass | 1.523 | 54.517 | |
| 16 | | sphere | infinity | 0.397 | | | | |
| 17 | IMG | sphere | infinity | 0.000 | | | | |

Table 3b

| | Third embodiment | | | | | | | | | |
| | Aspheric coefficient | | | | | | | | | |
| Surface number | K | A4 | A6 | A8 | A10 | A12 | A14 | A16 | A18 | A20 |
|---|---|---|---|---|---|---|---|---|---|---|
| 1 | -5.9767E-01 | -5.1302E - 03 | -3.0130E-04 | 5.0687E-05 | -5.6011E-06 | 6.5687E-07 | -6.0820E-08 | 3.4906E-09 | -1.0876E-10 | 1.4104E-12 |
| 2 | -5.2698E-01 | -9.8371E - 03 | -7.2994E-04 | 1.2013E-04 | -1.9390E-05 | 2.2471E-06 | -3.3370E-08 | -4.1738E-08 | 5.4394E-09 | -2.2551E-10 |
| 11 | 5.2192E+ 00 | -2.5675E - 03 | 7.2673E-05 | -4.3337E-05 | 1.5816E-05 | -3.4162E-06 | 4.3736E-07 | -3.2935E-08 | 1.3500E-09 | -2.3223E-11 |
| 12 | 8.9505E+ 00 | -3.1683E - 03 | 1.3996E-04 | -7.4595E-05 | 1.9814E-05 | -3.3253E-06 | 3.4669E-07 | -2.1845E-08 | 7.6229E-10 | -1.1343E-11 |

**EP 4 632 456 A2**

Referring to FIG. 6, it can be seen from (A) a longitudinal spherical aberration diagram, (B) an astigmatism curve diagram, and (C) a distortion diagram in FIG. 6 that, the spherical aberration value, astigmatism, and distortion of the optical lens 100 of the third embodiment are well controlled, so that the optical lens 100 of this embodiment has a good imaging quality. In addition, regarding the wavelengths corresponding to the curves in (A) in Figure 6, (B) in Figure 6, and (C) in Figure 6, please refer to the contents described in (A) in Figure 2, (B) in Figure 2, and (C) in Figure 2 in the first embodiment and will not be described again here.

Fourth embodiment

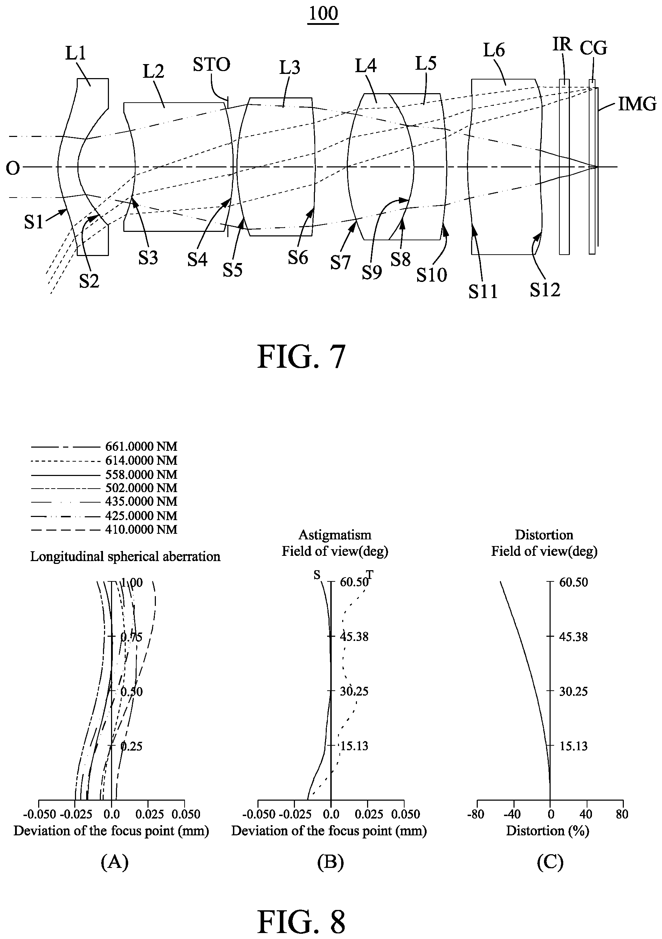

FIG. 7 is a schematic structural diagram of the optical lens 100 of the fourth embodiment. The optical lens 100 sequentially includes a first lens L1, a second lens L2, an aperture STO, a third lens L3, a fourth lens L4, a fifth lens L5, a sixth lens L6, a filter IR, and a protective glass CG along an optical axis O from an object side to an imaging side.

Further, the first lens L1 has negative refractive power, the second lens L2 has negative refractive power, third lens L3 has positive refractive power, the fourth lens L4 has positive refractive power, the fifth lens L5 has negative refractive power, and the sixth lens L6 has positive refractive power.

Furthermore, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is convex near the optical axis O, an imaging side surface S8 of the fourth lens L4 is convex near the optical axis O, an object side surface S9 of the fifth lens L5 is concave near the optical axis O, an imaging side surface S10 of the fifth lens L5 is convex near the optical axis O, an object side surface S11 of the sixth lens L6 is convex near the optical axis O, and an imaging side surface S12 of the sixth lens L6 is concave near the optical axis O.

Other parameters of the fourth embodiment are given in Table 4a, and the definition of each parameter can be obtained from the description of the foregoing embodiment and will not be described again here. It can be understood that the units of Y radius, thickness, and effective focal length in Table 4a are all mm, the reference wavelength for the refractive index, Abbe number, and the effective focal length of each lens in Table 4a is 558 nm.

In the fourth embodiment, the object side surface and the imaging side surface of the first lens L1 and the object side surface and the imaging side surface of the sixth lens L6 are both aspherical. Table 4b shows the cone coefficient and the higher-order term coefficients A4, A6, A8, A10, A12, A14, A16, A18, and A20 that can be used for each aspherical lens in the fourth embodiment.

Table 4a

| Fourth embodiment | | | | | | | | |
|---|---|---|---|---|---|---|---|---|
| F=5.06mm, FNO=1.67, FOV=121° | | | | | | | | |
| Surface number | Name | Surface type | Y radius | Thickness | Material | Refractive index | Abbe number | Effective focal length |
| Object side | | | infinity | infinity | | | | |
| 1 | First lens | asphere | 3.989 | 1.000 | glass | 1.806 | 40.731 | -9.117 |
| 2 | | asphere | 2.299 | 2.877 | | | | |
| 3 | Second lens | sphere | -6.832 | 4.927 | glass | 1.804 | 46.503 | -39.104 |
| 4 | | sphere | -11.529 | -0.270 | | | | |
| 5 | Aperture | sphere | infinity | 0.449 | | | | |
| 6 | Third lens | sphere | 9.591 | 3.947 | glass | 1.806 | 40.734 | 9.692 |
| 7 | | sphere | -35.141 | 1.608 | | | | |
| 8 | Fourth lens | sphere | 8.622 | 3.346 | glass | 1.593 | 68.624 | 6.577 |
| 9 | Fifth lens | sphere | -6.097 | 1.636 | glass | 2.003 | 19.317 | -8.662 |
| 10 | | sphere | -22.770 | 1.052 | | | | |

| Fourth embodiment | | | | | | | | |
|---|---|---|---|---|---|---|---|---|
| F=5.06mm, FNO=1.67, FOV=121° | | | | | | | | |
| Surface number | Name | Surface type | Y radius | Thickness | Material | Refractive index | Abbe number | Effective focal length |
| Object side | | | infinity | infinity | | | | |
| 11 | Sixth lens | asphere | 12.528 | 3.656 | glass | 1.619 | 63.855 | 49.027 |
| 12 | | asphere | 18.922 | 0.950 | | | | |
| 13 | IR | sphere | infinity | 0.500 | glass | 1.523 | 54.517 | |
| 14 | | sphere | infinity | 1.000 | | | | |
| 15 | CG | sphere | infinity | 0.300 | glass | 1.523 | 54.517 | |
| 16 | | sphere | infinity | 0.165 | | | | |
| 17 | IMG | sphere | infinity | 0.000 | | | | |

Table 4b

Fourth embodiment

| Surface number | K | A4 | A6 | A8 | A10 | A12 | A14 | A16 | A18 | A20 |
|---|---|---|---|---|---|---|---|---|---|---|
| | | | | | Aspheric coefficient | | | | | |
| 1 | -6.3489E-01 | -6.3098E-03 | -2.5635E-04 | 3.9540E-05 | -1.0241E-06 | -8.1049E-08 | 2.9090E-09 | 3.2456E-10 | -2.3044E-11 | 4.2687E-13 |
| 2 | -6.1670E-01 | -1.2182E-02 | 1.0951E-05 | -2.6905E-04 | 1.2339E-04 | -2.8624E-05 | 4.0275E-06 | -3.5738E-07 | 1.8473E-08 | -4.3122E-10 |
| 11 | 8.6531E+00 | -2.5120E-03 | 1.3966E-05 | -2.9111E-05 | 9.9744E-06 | -2.2325E-06 | 2.9626E-07 | -2.2825E-08 | 9.5000E-10 | -1.6502E-11 |
| 12 | 9.5631E+00 | -2.7433E-03 | 1.7644E-04 | -7.9720E-05 | 1.9182E-05 | -3.0096E-06 | 2.9971E-07 | -1.8130E-08 | 6.0739E-10 | -8.6425E-12 |

Referring to FIG. 8, it can be seen from (A) a longitudinal spherical aberration diagram, (B) an astigmatism curve diagram, and (C) a distortion diagram in FIG. 8 that, the spherical aberration value, astigmatism, and distortion of the optical lens 100 of the fourth embodiment are well controlled, so that the optical lens 100 of this embodiment has a good imaging quality. In addition, regarding the wavelengths corresponding to the curves in (A) in Figure 8, (B) in Figure 8, and (C) in Figure 8, please refer to the contents described in (A) in Figure 2, (B) in Figure 2, and (C) in Figure 2 in the first embodiment and will not be described again here.

Fifth embodiment

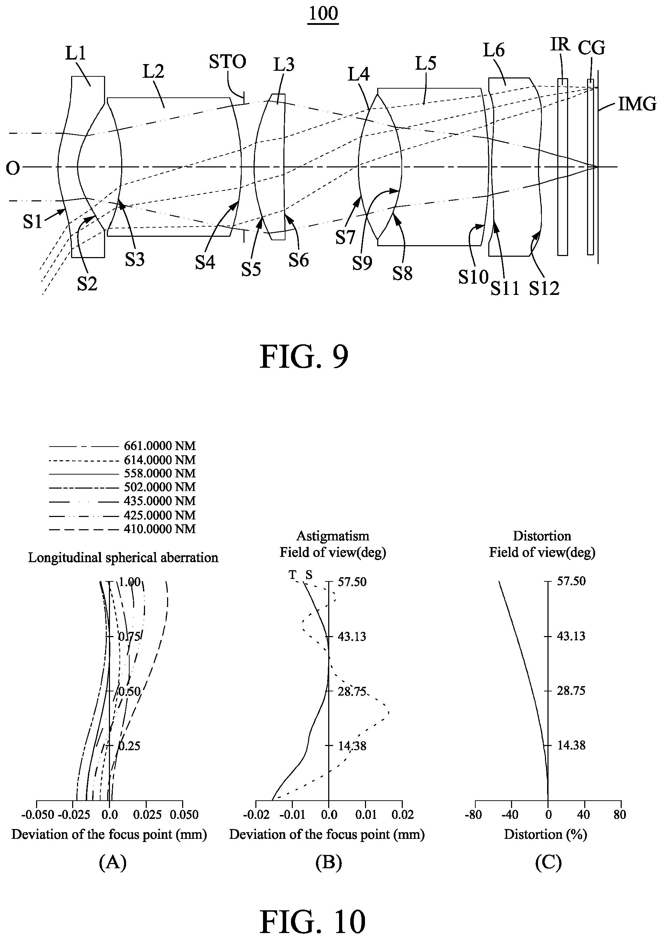

FIG. 9 is a schematic structural diagram of the optical lens 100 of the fifth embodiment. The optical lens 100 sequentially includes a first lens L1, a second lens L2, an aperture STO, a third lens L3, a fourth lens L4, a fifth lens L5, a sixth lens L6, a filter IR, and a protective glass CG along an optical axis O from an object side to an imaging side.

Further, the first lens L1 has negative refractive power, the second lens L2 has negative refractive power, third lens L3 has positive refractive power, the fourth lens L4 has positive refractive power, the fifth lens L5 has negative refractive power, and the sixth lens L6 has positive refractive power.

Furthermore, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is convex near the optical axis O, an imaging side surface S8 of the fourth lens L4 is convex near the optical axis O, an object side surface S9 of the fifth lens L5 is concave near the optical axis O, an imaging side surface S10 of the fifth lens L5 is convex near the optical axis O, an object side surface S11 of the sixth lens L6 is convex near the optical axis O, and an imaging side surface S12 of the sixth lens L6 is concave near the optical axis O.

Other parameters of the fifth embodiment are given in Table 5a, and the definition of each parameter can be obtained from the description of the foregoing embodiment and will not be described again here. It can be understood that the units of Y radius, thickness, and effective focal length in Table 5a are all mm, the reference wavelength for the refractive index, Abbe number, and the effective focal length of each lens in Table 5a is 558 nm.

In the fifth embodiment, the object side surface and the imaging side surface of the first lens L1 and the object side surface and the imaging side surface of the sixth lens L6 are both aspherical. Table 5b shows the cone coefficient and the higher-order term coefficients A4, A6, A8, A10, A12, A14, A16, A18, and A20 that can be used for each aspherical lens in the fifth embodiment.

Table 5a

| Fifith embodiment | | | | | | | | |
|---|---|---|---|---|---|---|---|---|
| F=5.56mm, FNO=1.64, FOV=115° | | | | | | | | |
| Surface number | Name | Surface type | Y radius | Thickness | Material | Refractive index | Abbe number | Effective focal length |
| Object side | | | infinity | infinity | | | | |
| 1 | First lens | asphere | 4.476 | 1.000 | glass | 1.806 | 40.731 | -10.345 |
| 2 | | asphere | 2.625 | 2.202 | | | | |
| 3 | Second lens | sphere | -7.830 | 6.017 | glass | 1.804 | 46.503 | -653.638 |
| 4 | | sphere | -10.676 | 0.118 | | | | |
| 5 | Aperture | sphere | infinity | 0.516 | | | | |
| 6 | Third lens | sphere | 7.973 | 1.506 | glass | 1.806 | 40.734 | 10.689 |
| 7 | | sphere | 93.104 | 3.731 | | | | |
| 8 | Fourth lens | sphere | 7.538 | 2.196 | glass | 1.593 | 68.624 | 6.034 |
| 9 | Fifth lens | sphere | -6.097 | 4.363 | glass | 2.003 | 19.317 | -10.155 |
| 10 | | sphere | -20.409 | 0.140 | | | | |

(continued)

| Fifith embodiment | | | | | | | | |
|---|---|---|---|---|---|---|---|---|
| F=5.56mm, FNO=1.64, FOV=115° | | | | | | | | |
| Surface number | Name | Surface type | Y radius | Thickness | Material | Refractive index | Abbe number | Effective focal length |
| Object side | | | infinity | infinity | | | | |
| 11 | Sixth lens | asphere | 14.317 | 2.368 | glass | 1.619 | 63.855 | -81.206 |
| 12 | | asphere | 10.443 | 0.950 | | | | |
| 13 | IR | sphere | infinity | 0.500 | glass | 1.523 | 54.517 | |
| 14 | | sphere | infinity | 1.000 | | | | |
| 15 | CG | sphere | infinity | 0.300 | glass | 1.523 | 54.517 | |
| 16 | | sphere | infinity | 0.241 | | | | |
| 17 | IMG | sphere | infinity | 0.000 | | | | |

Table 5b

Fifth embodiment

Aspheric coefficient

| Surface number | K | A4 | A6 | A8 | A10 | A12 | A14 | A16 | A18 | A20 |
|---|---|---|---|---|---|---|---|---|---|---|
| 1 | -6.4111E-01 | -6.5151E-03 | -1.2343E-04 | 3.2765E-05 | -5.3162E-07 | -2.0245E-07 | 1.9058E-08 | -7.3443E-10 | 1.1651E-11 | -3.0578E-14 |
| 2 | -6.3862E-01 | -1.0414E-02 | -4.7082E-04 | 2.5726E-04 | -7.4168E-05 | 1.6693E-05 | -2.5274E-06 | 2.3256E-07 | -1.1709E-08 | 2.4724E-10 |
| 11 | 1.2236E+01 | -3.3594E-03 | 1.6861E-04 | -9.2326E-05 | 2.5530E-05 | -4.5224E-06 | 4.9860E-07 | -3.3461E-08 | 1.2531E-09 | -2.0224E-11 |
| 12 | 2.8741E+00 | -4.0620E-03 | -9.2466E-05 | 4.6093E-05 | -1.1177E-05 | 1.5281E-06 | -1.2782E-07 | 6.5061E-09 | -1.8505E-10 | 2.2518E-12 |

Referring to FIG. 10, it can be seen from (A) a longitudinal spherical aberration diagram, (B) an astigmatism curve diagram, and (C) a distortion diagram in FIG. 10 that, the spherical aberration value, astigmatism, and distortion of the optical lens 100 of the fifth embodiment are well controlled, so that the optical lens 100 of this embodiment has a good imaging quality. In addition, regarding the wavelengths corresponding to the curves in (A) in Figure 10, (B) in Figure 10, and (C) in Figure 10, please refer to the contents described in (A) in Figure 2, (B) in Figure 2, and (C) in Figure 2 in the first embodiment and will not be described again here.

Sixth embodiment

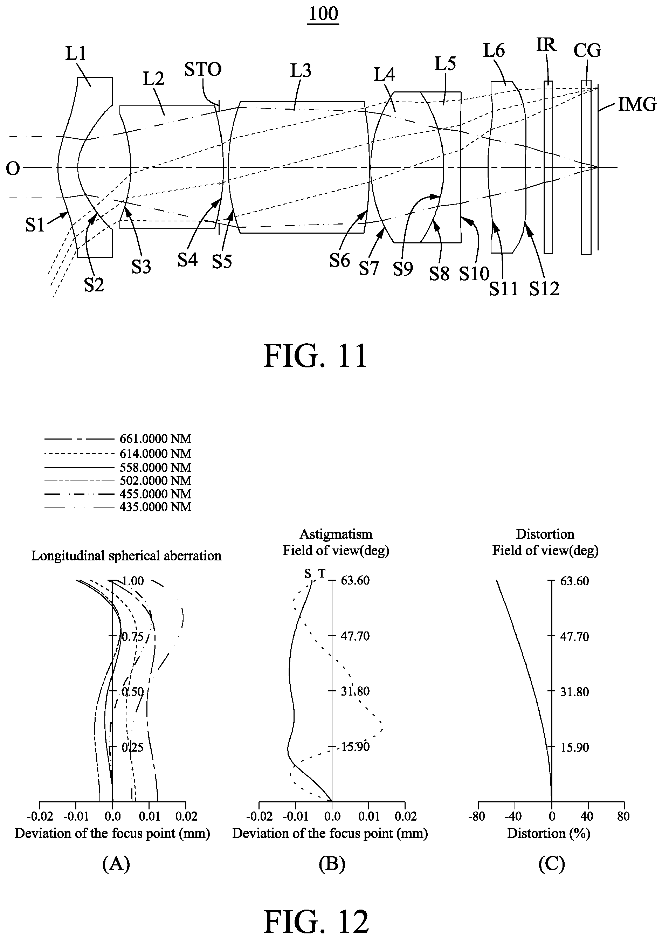

FIG. 11 is a schematic structural diagram of the optical lens 100 of the sixth embodiment. The optical lens 100 sequentially includes a first lens L1, a second lens L2, an aperture STO, a third lens L3, a fourth lens L4, a fifth lens L5, a sixth lens L6, a filter IR, and a protective glass CG along an optical axis O from an object side to an imaging side.
Further, the first lens L1 has negative refractive power, the second lens L2 has negative refractive power, third lens L3 has positive refractive power, the fourth lens L4 has positive refractive power, the fifth lens L5 has negative refractive power, and the sixth lens L6 has positive refractive power.
Furthermore, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is convex near the optical axis O, an imaging side surface S8 of the fourth lens L4 is convex near the optical axis O, an object side surface S9 of the fifth lens L5 is concave near the optical axis O, an imaging side surface S10 of the fifth lens L5 is convex near the optical axis O, an object side surface S11 of the sixth lens L6 is convex near the optical axis O, and an imaging side surface S12 of the sixth lens L6 is concave near the optical axis O.
Other parameters of the sixth embodiment are given in Table 6a, and the definition of each parameter can be obtained from the description of the foregoing embodiment and will not be described again here. It can be understood that the units of Y radius, thickness, and effective focal length in Table 6a are all mm, the reference wavelength for the refractive index, Abbe number, and the effective focal length of each lens in Table 6a is 558 nm.
In the sixth embodiment, the object side surface and the imaging side surface of the first lens L1 and the object side surface and the imaging side surface of the sixth lens L6 are both aspherical. Table 6b shows the cone coefficient and the higher-order term coefficients A4, A6, A8, A10, A12, A14, A16, A18, and A20 that can be used for each aspherical lens in the fifth embodiment.

Table 6a

| Sixth embodiment | | | | | | | | |
|---|---|---|---|---|---|---|---|---|
| F=5.02mm, FNO=1.62, FOV=127.2° | | | | | | | | |
| Surface number | Name | Surface type | Y radius | Thickness | Material | Refractive index | Abbe number | Effective focal length |
| Object side | | | infinity | infinity | | | | |
| 1 | First lens | asphere | 3.860 | 1.000 | glass | 1.809 | 40.970 | -9.380 |
| 2 | | asphere | 2.265 | 2.655 | | | | |
| 3 | Second lens | sphere | -6.798 | 4.658 | glass | 2.003 | 28.316 | -33.887 |
| 4 | | sphere | -11.405 | -0.203 | | | | |
| 5 | Aperture | sphere | infinity | 0.451 | | | | |
| 6 | Third lens | sphere | 9.457 | 7.106 | glass | 1.729 | 54.685 | 9.755 |
| 7 | | sphere | -19.828 | 0.062 | | | | |
| 8 | Fourth lens | sphere | 6.837 | 3.669 | glass | 1.550 | 75.496 | 6.846 |
| 9 | Fifth lens | sphere | -6.823 | 0.838 | glass | 1.921 | 23.956 | -7.089 |
| 10 | | sphere | 191.563 | 1.383 | | | | |

(continued)

| Sixth embodiment | | | | | | | | |
|---|---|---|---|---|---|---|---|---|
| F=5.02mm, FNO=1.62, FOV=127.2° | | | | | | | | |
| Surface number | Name | Surface type | Y radius | Thickness | Material | Refractive index | Abbe number | Effective focal length |
| Object side | | | infinity | infinity | | | | |
| 11 | Sixth lens | asphere | 10.167 | 1.896 | glass | 1.619 | 63.855 | 23.626 |
| 12 | | asphere | 30.819 | 0.950 | | | | |
| 13 | IR | sphere | infinity | 0.400 | glass | 1.523 | 54.517 | |
| 14 | | sphere | infinity | 1.440 | | | | |
| 15 | CG | sphere | infinity | 0.500 | glass | 1.523 | 54.517 | |
| 16 | | sphere | infinity | 0.361 | | | | |
| 17 | IMG | sphere | infinity | 0.000 | | | | |

Table 6b

Sixth embodiment

Aspheric coefficient

| Surface number | K | A4 | A6 | A8 | A10 | A12 | A14 | A16 | A18 | A20 |
|---|---|---|---|---|---|---|---|---|---|---|
| 1 | -5.7040E-01 | -6.3358E-03 | -2.5598E-04 | 3.9576E-05 | -1.0230E-06 | -8.1013E-08 | 2.9090E-09 | 3.2453E-10 | -2.3047E-11 | 4.2655E-13 |
| 2 | -5.5822E-01 | -1.2157E-02 | 1.0467E-05 | -2.6926E-04 | 1.2341E-04 | -2.8619E-05 | 4.0281E-06 | -3.5734E-07 | 1.8474E-08 | -4.3186E-10 |
| 11 | 1.6036E+00 | -2.5163E-03 | 1.3975E-05 | -2.9152E-05 | 9.9697E-06 | -2.2328E-06 | 2.9625E-07 | -2.2825E-08 | 9.5003E-10 | -1.6499E-11 |
| 12 | 4.8423E+01 | -2.7680E-03 | 1.7619E-04 | -7.9730E-05 | 1.9181E-05 | -3.0097E-06 | 2.9971E-07 | -1.8130E-08 | 6.0741E-10 | -8.6402E-12 |

Referring to FIG. 12, it can be seen from (A) a longitudinal spherical aberration diagram, (B) an astigmatism curve diagram, and (C) a distortion diagram in FIG. 12 that, the spherical aberration value, astigmatism, and distortion of the optical lens 100 of the sixth embodiment are well controlled, so that the optical lens 100 of this embodiment has a good imaging quality. In addition, regarding the wavelengths corresponding to the curves in (A) in Figure 12, (B) in Figure 12, and (C) in Figure 12, please refer to the contents described in (A) in Figure 2, (B) in Figure 2, and (C) in Figure 2 in the first embodiment and will not be described again here.

Table 7 shows the values of FOV, TTL/F, TTL/SD1, F/ImgH, F1/F, F3/F, F4/F, F1/CT1, SAGS2/CT1, SD1/ImgH, SD7/SD6, CT4/CT5, F5/F4, R3/(R4+CT2), |(Vd4-Vd5)/F45|, F45/F, CT4/ET4, |R5/R6|, R11/R12, CT6/CT56, F*tan(FOV/2)/ImgH, arctan(1/K12), TTL/ImgH, TTL/ImgH/FOV, FNO, F2/F, F5/F, |F6/F|, F2/CT2, F3/CT3, F4/CT4, F5/CT5, |F6/CT6|, R1/R2, R3/R4, R7/R8, |R9/R10|, CT1/ET1, CT2/ET2, CT3/ET3, CT5/ET5 and CT6/ET6 in the optical lens 100 of the first to sixth embodiments.

Table 7

|  | First embodiment | Second embodiment | Third embodiment | Fourth embodiment | Fifth embodiment | Sixth embodiment |
|---|---|---|---|---|---|---|
| FOV | 121 | 120.68 | 121.04 | 121 | 115 | 127.2 |
| TTL/F | 5.319 | 5.338 | 5.333 | 5.364 | 4.883 | 5.412 |
| TTL/SD1 | 7.105 | 6.849 | 6.677 | 6.652 | 6.503 | 6.555 |
| F/ImgH | 1.270 | 1.270 | 1.261 | 1.257 | 1.382 | 1.248 |
| F1/F | -1.723 | -1.810 | -2.030 | -1.802 | -1.861 | -1.869 |
| F3/F | 1.937 | 1.969 | 2.146 | 1.915 | 1.922 | 1.943 |
| F4/F | 1.219 | 1.244 | 1.322 | 1.296 | 1.085 | 1.364 |
| F1/CT1 | -8.734 | -9.183 | -10.334 | -9.117 | -10.345 | -9.380 |
| SAGS2/CT1 | 1.313 | 1.338 | 1.574 | 1.536 | 1.362 | 1.551 |
| SD1/ImgH | 0.950 | 0.983 | 1.008 | 1.013 | 1.038 | 1.031 |
| SD7/SD6 | 0.948 | 0.972 | 0.985 | 0.956 | 0.868 | 1.157 |
| CT4/CT5 | 1.606 | 2.027 | 3.378 | 2.045 | 0.503 | 4.377 |
| F5/F4 | -1.644 | -1.489 | -1.477 | -1.317 | -1.683 | -1.035 |
| R3/(R4+CT2) | 1.056 | 0.997 | 1.024 | 1.035 | 1.681 | 1.008 |
| \|(Vd4-Vd5)/F45\| | 3.115 | 3.119 | 3.301 | 2.353 | 2.965 | 1.661 |
| F45/F | 3.107 | 3.114 | 3.000 | 4.141 | 2.992 | 6.180 |
| CT4/ET4 | 1.643 | 1.555 | 1.402 | 1.666 | 2.678 | 1.957 |
| \|R5/R6\| | 0.427 | 0.542 | 0.494 | 0.273 | 0.086 | 0.477 |
| R11/R12 | 0.802 | 0.988 | 0.903 | 0.662 | 1.371 | 0.330 |
| CT6/CT56 | 32.639 | 21.241 | 13.172 | 3.475 | 16.920 | 1.371 |
| F*tan(FOV/2)/ImgH | 2.245 | 2.230 | 2.231 | 2.221 | 2.170 | 2.514 |
| arctan(1/K12) | -62.668 | -61.668 | -60.668 | -59.668 | -58.668 | -57.668 |
| TTL/ImgH | 6.7510 | 6.7336 | 6.7316 | 6.7366 | 6.7531 | 6.7576 |
| TTL/ImgH/FOV | 0.0558 | 0.0558 | 0.0556 | 0.0557 | 0.0587 | 0.0531 |
| FNO | 1.62 | 1.62 | 1.62 | 1.67 | 1.64 | 1.62 |
| F2/F | -6.992 | -7.069 | -7.122 | -7.728 | -117.561 | -6.750 |
| F5/F | -2.003 | -1.852 | -1.952 | -1.712 | -1.826 | -1.412 |
| \|F6/F\| | 14.510 | 29.067 | 24.625 | 9.690 | 14.605 | 4.706 |
| F2/CT2 | -7.493 | -7.536 | -6.535 | -7.937 | -108.628 | -7.275 |
| F3/CT3 | 3.419 | 3.095 | 3.127 | 2.456 | 7.097 | 1.373 |

(continued)

| | First embodiment | Second embodiment | Third embodiment | Fourth embodiment | Fifth embodiment | Sixth embodiment |
|---|---|---|---|---|---|---|
| F4/CT4 | 1.470 | 1.297 | 1.150 | 1.966 | 2.748 | 1.866 |
| F5/CT5 | -3.882 | -3.914 | -5.736 | -5.294 | -2.328 | -8.458 |
| \|F6/CT6\| | 23.327 | 47.540 | 62.657 | 13.410 | 34.286 | 12.459 |
| R1/R2 | 1.822 | 1.766 | 1.646 | 1.735 | 1.705 | 1.704 |
| R3/R4 | 0.599 | 0.602 | 0.580 | 0.593 | 0.733 | 0.596 |
| R7/R8 | -1.976 | -1.617 | -1.537 | -1.421 | -1.236 | -1.002 |
| \|R9/R10\| | 0.380 | 0.327 | 0.357 | 0.268 | 0.299 | 0.036 |
| CT1/ET1 | 0.573 | 0.560 | 0.690 | 0.641 | 0.601 | 0.631 |
| CT2/ET2 | 0.965 | 0.980 | 0.968 | 0.961 | 0.977 | 0.960 |
| CT3/ET3 | 1.324 | 1.274 | 1.246 | 1.207 | 1.926 | 1.114 |
| CT5/ET5 | 0.814 | 0.776 | 0.730 | 0.742 | 0.905 | 0.488 |
| CT6/ET6 | 1.107 | 1.047 | 1.084 | 1.097 | 1.071 | 1.385 |

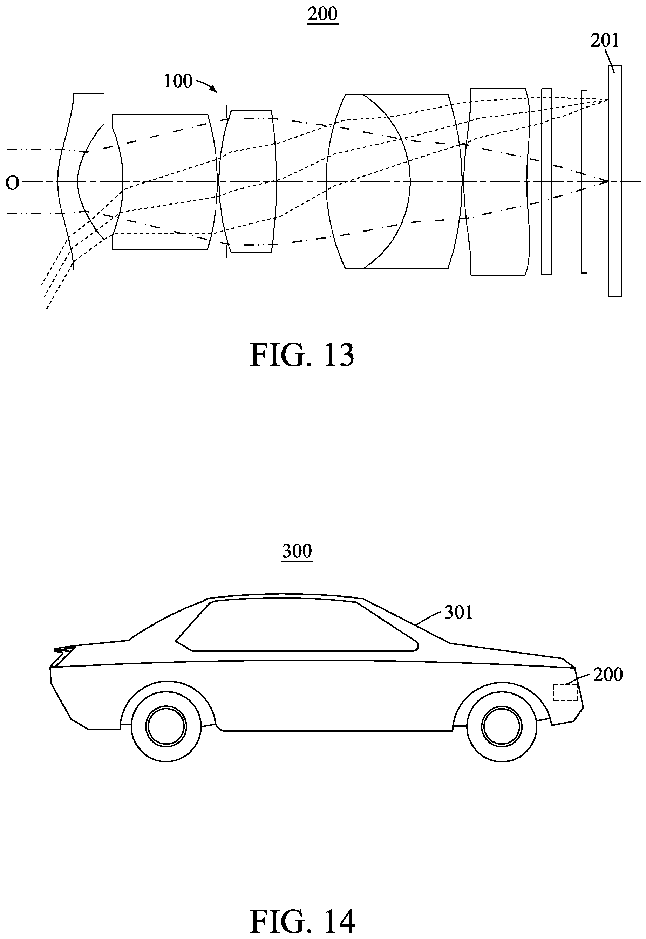

Referring to FIG. 13, the present disclosure also discloses an image module 200. The image module 200 includes a photosensitive chip 201 and the above-mentioned optical lens 100. The photosensitive chip 201 is arranged on the imaging side of the optical lens 100. The optical lens 100 can be used to receive the light signal of the object being photographed and project it to the photosensitive chip 201, and the photosensitive chip 201 can be used to convert the light signal corresponding to the object being photographed into an image signal, which will not be elaborated here. It can be understood that the image module 200 with the above-mentioned optical lens 100 also has all the technical effects of the above-mentioned optical lens 100, that is, the image module 200 can meet the requirements of large field of view, high resolution and miniaturization.

Referring to FIG. 14, the present disclosure also discloses a terminal device 300. The terminal device 300 includes a housing 301 and the above-mentioned image module 200. The image module 200 is arranged in the housing 301. The terminal device 300 may be, but is not limited to, a mobile phone, a tablet computer, a notebook computer, a smart watch, a monitor, etc. It can be understood that the terminal device 300 with the above-mentioned image module 200 also has all the technical effects of the above-mentioned optical lens 100, that is, it can meet the requirements of large field of view, high resolution and miniaturization.

It should be noted that the above examples are only used to illustrate the technical solutions of the present application and not to limit them. Although the present application has been described in detail with reference to the preferred embodiments, it should be understood by those skilled in the art that modifications or equivalent substitutions can be made to the technical solutions of the present application without departing from the spirit and scope of the present application.

**Claims**

1.  An optical lens (100), from an object side to an imaging side along an optical axis (O), sequentially comprising:

    a first lens (L1) having negative refractive power, an object side surface (S1) of the first lens (L1) being convex near the optical axis (O), and an imaging side surface (S2) of the first lens (L1) being concave near the optical axis (O);
    a second lens (L2) having negative refractive power, an object side surface (S3) of the second lens (L2) being concave near the optical axis (O), and an imaging side surface (S4) of the second lens (L2) being convex near the optical axis (O);
    a third lens (L3) having positive refractive power, an object side surface (S5) of the third lens (L3) being convex near the optical axis (O);
    a fourth lens (L4) having positive refractive power, an object side surface (S7) of the fourth lens (L4) being convex near the optical axis (O), an imaging side surface (S8) of the fourth lens (L4) being convex near the optical axis (O);
    a fifth lens (L5) having negative refractive power, an object side surface (S9) of the fifth lens (L5) being concave near the optical axis (O);

a sixth lens (L6) having refractive power, an object side surface (S11) of the sixth lens (L6) is convex near the optical axis (O), and an imaging side surface (S12) of the sixth lens (L6) being concave near the optical axis (O); and

an image plane (IMG);

the optical lens (100) satisfying following conditional expressions:

115°<FOV<130°, and 4.8<TTL/F<5.5;

wherein, FOV is the maximum field of view of the optical lens (100), TTL is a distance from the object side surface (S1) of the first lens (L1) to the image plane (IMG) of the optical lens (100) along the optical axis (O), and F is an effective focal length of the optical lens (100).

2. The optical lens (100) of claim 1, wherein the optical lens (100) further satisfies following conditional expression:

$$6.5 \leq TTL/SD1 \leq 7.2,$$

wherein, SD1 is half of the maximum effective aperture of the object side surface (S1) of the first lens (L1).

3. The optical lens (100) of claim 1, wherein the optical lens (100) further satisfies at least one of following conditional expressions:

$$-2.1 \leq F1/F \leq -1.7,$$

$$1.9 \leq F3/F \leq 2.2,$$

and

$$1 \leq F4/F \leq 1.4;$$

wherein, F1 is an effective focal length of the first lens (L1), F3 is an effective focal length of the third lens (L3), and F4 is an effective focal length of the fourth lens (L4).

4. The optical lens (100) of claim 1, wherein the optical lens (100) further satisfies at least one of following conditional expressions:

$$1.3 \leq SAGS2/CT1 \leq 1.6,$$

and

$$0.95 \leq SD1/ImgH \leq 1.05;$$

wherein, CT1 is a thickness of the first lens (L1) at the optical axis (O), SAGS2 is a vector height of an edge of an optical effective diameter of the imaging side surface (S2) of the first lens (L1), SD1 is half of the maximum effective aperture of the object side surface (S1) of the first lens (L1), and ImgH is half of an image height corresponding to the maximum field of view angle of the optical lens (100).

5. The optical lens (100) of claim 1, wherein the optical lens (100) further satisfies at least one of following conditional expressions:

$$0.8 \leq SD7/SD6 \leq 1.2,$$

$$0.5 \leq CT4/CT5 \leq 4.62,$$

and

$$-2 \leq F5/F4 \leq -1;$$

wherein, SD6 is half of the maximum effective aperture of an imaging side surface (S6) of the third lens (L3), SD7 is half of the maximum effective aperture of the object side surface (S7) of the fourth lens (L4), CT4 is a thickness of the fourth lens (L4) at the optical axis (O), CT5 is a thickness of the fifth lens (L5) at the optical axis (O), F4 is an effective focal length of the fourth lens (L4), and F5 is an effective focal length of the fifth lens (L5).

6. The optical lens (100) of claim 1, wherein the optical lens (100) further satisfies at least one of following conditional expressions:

$$1.6 \text{ mm}^{-1} \leq |(Vd4-Vd5)/F45| \leq 3.4 \text{ mm}^{-1},$$

and

$$2.9 \leq F45/F \leq 6.2;$$

wherein, Vd4 is an Abbe number of the fourth lens (L4), Vd5 is an Abbe number of the fifth lens (L5), and F45 is a combined effective focal length of the fourth lens (L4) and the fifth lens (L5).

7. The optical lens (100) of claim 1, wherein the optical lens (100) further satisfies following conditional expression:

$$1.4 \leq CT4/ET4 \leq 2.7,$$

wherein, CT4 is a thickness of the fourth lens (L4) at the optical axis (O), and ET4 is a distance along the optical axis (O) from the maximum effective aperture of the object side surface (S7) of the fourth lens (L4) to the maximum effective aperture of the imaging side surface (S8) of the fourth lens (L4).

8. The optical lens (100) of claim 1, wherein the optical lens (100) further satisfies at least one of following conditional expressions:

$$1.3 \leq CT6/CT56 \leq 33,$$

$$2.1 \leq F*\tan(FOV/2)/ImgH \leq 2.55,$$

and

$$-63 \leq \arctan(1/K12) \leq -57;$$

wherein, CT6 is a thickness of the sixth lens (L6) at the optical axis (O), CT56 is a distance between an imaging side surface (S10) of the fifth lens (L5) and the object side surface (S11) of the sixth lens (L6) at the optical axis (O), ImgH is half of an image height corresponding to the maximum field of view angle of the optical lens (100), and K12 is an edge slope of the imaging side surface (S12) of the sixth lens (L6) corresponding to the maximum field of view angle of the optical lens (100).

9. The optical lens (100) of claim 1, wherein the optical lens (100) further satisfies following conditional expression:

$$1.24 \leq F/ImgH \leq 1.4;$$

wherein, ImgH is half of an image height corresponding to the maximum field of view angle of the optical lens (100).

10. The optical lens (100) of claim 1, wherein the optical lens (100) further satisfies following conditional expression:

$$-11 \leq F1/CT1 \leq -8,$$

wherein, F1 is an effective focal length of the first lens (L1), and CT1 is a thickness of the first lens (L1) at the optical axis (O).

11. The optical lens (100) of claim 1, wherein the optical lens (100) further satisfies following conditional expression:

$$0.95 \leq R3/(R4+CT2) \leq 1.7,$$

wherein, R3 is a radius of curvature of the object side surface (S3) of the second lens (L2) at the optical axis (O), R4 is a radius of curvature of the imaging side surface (S4) of the second lens (L2) at the optical axis (O), and CT2 is a thickness of the second lens (L2) at the optical axis (O).

12. The optical lens (100) of claim 1, wherein the optical lens (100) further satisfies following conditional expression:

$$|R5/R6| \leq 0.55,$$

wherein, R5 is a radius of curvature of the object side surface (S5) of the third lens (L3) at the optical axis (O), and R6 is a radius of curvature of an imaging side surface (S6) of the third lens (L3) at the optical axis (O).

13. The optical lens (100) of claim 1, wherein the optical lens (100) further satisfies following conditional expression:

$$0.3 \leq R11/R12 \leq 1.4,$$

wherein, R11 is a radius of curvature of the object side surface (S11) of the sixth lens (L6) at the optical axis (O), and R12 is a radius of curvature of the imaging side surface (S12) of the sixth lens (L6) at the optical axis (O).

14. An image module (200) comprising a photosensitive chip (201) and the optical lens (100) of any one of claims 1 to 12, the photosensitive chip (201) is arranged on the imaging side of the optical lens (100).

15. A terminal device (300) comprising a housing (301) and the image module (200) of claim 14, the image module (200) being arranged in the housing (301).

**FIG. 1**

**FIG. 2**

**FIG. 3**

— - — 656.0000 NM
----------- 588.0000 NM
———— 546.0000 NM
— - — — 486.0000 NM
— · — 436.0000 NM

Longitudinal spherical aberration

Astigmatism
Field of view(deg)

Distortion
Field of view(deg)

-0.02 -0.01 0.0 0.01 0.02
Deviation of the focus point (mm)

-0.02 -0.01 0.0 0.01 0.02
Deviation of the focus point (mm)

-80 -40 0 40 80
Distortion (%)

(A)

(B)

(C)

**FIG. 4**

**FIG. 5**

——— - ——— 661.0000 NM
-------- 614.0000 NM
——————— 558.0000 NM
———————— 502.0000 NM
——— · · ——— 435.0000 NM

Longitudinal spherical aberration

Astigmatism
Field of view(deg)

Distortion
Field of view(deg)

Deviation of the focus point (mm)

Deviation of the focus point (mm)

Distortion (%)

(A)

(B)

(C)

**FIG. 6**

100

## FIG. 7

```
— - — 661.0000 NM
- - - - - - - 614.0000 NM
————— 558.0000 NM
— - - - - - 502.0000 NM
— · - — 435.0000 NM
— · — · — 425.0000 NM
— — — — 410.0000 NM
```

Longitudinal spherical aberration

Astigmatism
Field of view(deg)

Distortion
Field of view(deg)

Deviation of the focus point (mm)

Deviation of the focus point (mm)

Distortion (%)

(A)

(B)

(C)

## FIG. 8

100

FIG. 9

————— 661.0000 NM
------------ 614.0000 NM
————— 558.0000 NM
—————— 502.0000 NM
——    —— 435.0000 NM
—  —  — 425.0000 NM
— — — — 410.0000 NM

Longitudinal spherical aberration

Astigmatism
Field of view(deg)

Distortion
Field of view(deg)

-0.050 -0.025 0.0 0.025 0.050
Deviation of the focus point (mm)

-0.02 -0.01 0.0 0.01 0.02
Deviation of the focus point (mm)

-80  -40   0   40   80
Distortion (%)

(A)

(B)

(C)

FIG. 10

## 100

**FIG. 11**

——— - ——— 661.0000 NM
-------- 614.0000 NM
——————— 558.0000 NM
———— - —— 502.0000 NM
—— - ·· —— 455.0000 NM
—— · · —— 435.0000 NM

Longitudinal spherical aberration

Deviation of the focus point (mm)

(A)

Astigmatism
Field of view(deg)

Deviation of the focus point (mm)

(B)

Distortion
Field of view(deg)

Distortion (%)

(C)

**FIG. 12**

## 200

# FIG. 13

## 300

# FIG. 14